(19)

**Europäisches Patentamt**

**European Patent Office**

**Office européen des brevets**

(11) **EP 4 672 167 A1**

(12) **EUROPEAN PATENT APPLICATION**

(43) Date of publication:
**31.12.2025 Bulletin 2026/01**

(21) Application number: **25184261.3**

(22) Date of filing: **20.06.2025**

(51) International Patent Classification (IPC):
*G06V 10/25* (2022.01)    *G06V 10/82* (2022.01)

(52) Cooperative Patent Classification (CPC):
**G06V 10/82; G06V 10/25**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024 US 202463665589 P
18.06.2025 US 202519242264**

(71) Applicant: **Google LLC
Mountain View, CA 94043 (US)**

(72) Inventors:
• **YANG, Feng**
  **Sunnyvale (US)**
• **LEE, Seunghyun**
  **Mountain View (US)**
• **KE, Junjie**
  **San Jose (US)**
• **LI, Yinxiao**
  **Sunnyvale (US)**
• **HE, Junfeng**
  **Fremont (US)**
• **HICKSON, Steven**
  **Atlanta (US)**
• **DATSENKO, Ekaterina**
  **Mountain View (US)**
• **YANG, Ming-Hsuan**
  **Cupertino (US)**
• **ESSA, Irfan**
  **Atlanta (US)**

(74) Representative: **Varley, James Richard et al
Venner Shipley LLP
200 Aldersgate
London EC1A 4HD (GB)**

(54) **VISION-LANGUAGE MODEL FOR IMAGE CROPPING THROUGH IN-CONTEXT LEARNING**

(57)    The technology provides for enhanced image cropping via in-context learning. It includes an efficient prompt retrieval mechanism for image cropping to automate the selection of in-context examples. It also includes an iterative refinement strategy to iteratively enhance the predicted crops. The image cropping framework is applicable to a wide range of cropping tasks, including free-form cropping, subject-aware cropping, and aspect ratio-aware cropping. The approach employs a trained large vision-language model associated with in-context learning. For instance, given an input image (whether from free-form, subject-aware or aspect ratio-aware cropping), the top-K semantically similar images from a dataset are retrieved as an in-context learning prompt. Then the in-context learning prompt is fed to a pretrained vision-language model to generate a set of crops. The crop candidates of the set are iteratively refined to yield a final output crop. The final output crop can then be applied to a downstream imaging task.

EP 4 672 167 A1

**Description**

CROSS-REFERENCE TO RELATED APPLICATIONS

This application claims the benefit of and priority to U.S. Provisional Patent Application No. 63/665,589, filed June 28, 2024, the entire disclosure of which is incorporated by reference herein.

BACKGROUND

A goal of effective image cropping is to identify visually appealing crops within an image. Existing approaches can rely on specialized computing architectures trained on specific datasets, which may struggle to be adapted to new requirements. Recent breakthroughs in large vision-language models (VLMs) have enabled visual in-context learning without explicit training. However, effective strategies for vision downstream tasks with VLMs remain largely unclear. Some cropping methods train neural networks on images and ground-truth crops to automatically localize aesthetic crops. However, such approaches often depend on specially designed networks or features, which can struggle to generalize effectively when confronted with new requirements or diverse datasets. Additionally, in such approaches for specialized cropping tasks such as subject-aware cropping with subject masks or aspect ratio-aware cropping with target aspect ratio, unique networks may be required to be developed and retrained, further complicating the process. Moreover, it can be challenging to fine-tune a VLM for downstream tasks, thus limiting its suitability for image cropping.

BRIEF SUMMARY

The technology involves an effective approach to leverage VLMs for enhanced image cropping via in-context learning. It includes an efficient prompt retrieval mechanism for image cropping to automate the selection of in-context examples. It also includes an iterative refinement strategy to iteratively enhance the predicted crops. The image cropping framework, also identified as "Cropper" herein, is applicable to a wide range of cropping tasks, including free-form cropping, subject-aware cropping, and aspect ratio-aware cropping. As discussed further below, experiments and a user study demonstrate that the Cropper approach can significantly outperform conventional cropping methods across different benchmarks.

Personalized content feeds, photo storage and processing, targeted advertising and other applications use cropped images and can benefit from the technology discussed herein. Other beneficial uses include color enhancement and image enhancement, object detection, segmentation, etc. In some situations, the image cropping processes discussed herein may be performed by a back-end (e.g., cloud computing) platform, while in other situations the processes may be performed locally (e.g., on a client computing device). In further situations, different aspects of the processes and downstream tasks can be split among different computing devices.

According to one aspect of the technology, a method comprises: performing, by one or more processors of a computing system according to an input image, visual prompt retrieval on a set of stored images, the visual prompt retrieval applying an image similarity metric to obtain a subset of the set of stored images to be used as in-context learning examples. The method also includes performing, by the one or more processors using a vision language model, iterative crop refinement on the in-context learning examples, the iterative crop refinement including in each iteration: generating, by the vision language model, one or more cropped images according to a prompt, and evaluating the one or more cropped images according to a scorer; and refining, by the vision language model, the cropped images according to the evaluating according to the scorer. The method further comprises obtaining, by the one or more processors using the vision language model, a cropped final output image upon completion of the iterative crop refinement.

In an example performing visual prompt retrieval using the image similarity metric to obtain the subset of the set of stored images includes selecting top-K ones of the set of stored images and a corresponding set of ground-truth crops for each image in the subset, in which K is at least 1. Here, the corresponding set of ground-truth crops for each image in the subset may be associated with at least one of free-form cropping, subject-aware cropping or aspect ratio-aware cropping. Each crop ground-truth of the set of ground-truth crops for the free-form cropping may be represented by a mean opinion score and corners of that crop. Each crop ground truth of the set of ground-truth crops for the subject aware cropping may be associated with a mask indicating a subject of interest. Each crop ground truth of the set of ground-truth crops for the aspect ratio-aware cropping may be associated with a different aspect ratio.

Generating the one or more cropped images according to the prompt may include providing the input image and the in-context learning examples to the vision language model. The scorer may be an aesthetic scorer. In this case, the aesthetic scorer may be configured to provide evaluations based on a set of factors including at least one of perspective, composition, or color contrast.

The image similarity metric may be a cosine similarity metric or other suitable metric. The prompt may be to propose a set of potential crop candidates represented by crop coordinates. The method may further comprise sending the cropped final output image to a downstream imaging task. For example, the downstream imaging task may be one or more of a classification task, an object detection task, a segmentation task, an image quality assessment task, or a video recognition task.

According to another aspect of the technology, a computing system comprises: memory configured to store at least one of a set of source imagery or a vision language model, and one or more processors operatively coupled with the memory. The one or more processors are configured to perform, according to an input image, visual prompt retrieval on a set of images stored in the memory, the visual prompt retrieval including application of an image similarity metric to obtain a subset of the set of stored images to be used as in-context learning examples. The one or more processors are also configured to perform, using the vision language model, iterative crop refinement on the in-context learning examples, the iterative crop refinement including in each iteration: generation, by the vision language model, one or more cropped images according to a prompt, evaluation of the one or more cropped images according to a scorer, and refinement, by the vision language model, of the cropped images according to the evaluating according to the scorer. The one or more processors are further configured to obtain, using the vision language model, a cropped final output image upon completion of the iterative crop refinement.

In one example, performance of visual prompt retrieval using the image similarity metric to obtain the subset of the set of stored images includes selection of top-K ones of the set of stored images and a corresponding set of ground-truth crops for each image in the subset, in which K is at least 1. Here, the corresponding set of ground-truth crops for each image may be the subset is associated with at least one of free-form cropping, subject-aware cropping or aspect ratio-aware cropping. Generation of the one or more cropped images according to the prompt may include providing the input image and the in-context learning examples to the vision language model. The image similarity metric may be a cosine similarity metric or other suitable metric. The prompt may be to propose a set of potential crop candidates represented by crop coordinates. Moreover, the one or more processors may be further configured to apply the cropped final output image to a downstream imaging task.

Each of the examples and variations identified above and/or discussed further below may be employed with any other examples or variations unless expressly stated otherwise herein.

BRIEF DESCRIPTION OF THE DRAWINGS

The patent or application file contains at least one drawing executed in color. Copies of this patent or patent application publication with color drawing(s) will be provided by the Office upon request and payment of the necessary fee.

Fig. 1 illustrates aspects of the image cropping methodology in accordance with aspects of the technology.
Fig. 2 illustrates additional aspects of the image cropping methodology in accordance with aspects of the technology.
Fig. 3 illustrates a table with a VLM prompt used for free-form cropping in accordance with aspects of the technology.
Fig. 4 illustrates an example of an initial prompt for free-form cropping in accordance with aspects of the technology.
Fig. 5 illustrates a visualization of iterative crop refinement for free-form cropping in accordance with aspects of the technology.
Fig. 6 is an example of an initial prompt for subject-aware cropping in accordance with aspects of the technology.
Fig. 7 is an example of an initial prompt for aspect ratio-aware cropping (16:9) in accordance with aspects of the technology.
Fig. 8 illustrates a table showing VLM prompt details used for subject-aware cropping, in accordance with aspects of the technology.
Fig. 9 illustrates a table showing VLM prompt details used for aspect ratio aware cropping, in accordance with aspects of the technology.
Figs. 10A-B illustrate an example diagram of a chain-of-thoughts process, in a visual language model.
Fig. 11 illustrates an example of prompts for color enhancement.
Fig. 12 illustrates a table of quantitative comparison to existing methods in accordance with aspects of the technology.
Fig. 13 illustrates another table of quantitative comparison to existing methods in accordance with aspects of the technology.
Fig. 14 illustrates a Qualitative comparison of Cropper on the GAICD test set in accordance with aspects of the technology.
Fig. 15 illustrates another table showing quantitative comparison on the SACD dataset in accordance with aspects of the technology.
Fig. 16 illustrates imagery used for the evaluation of the table in Fig. 15, in accordance with aspects of the technology.
Fig. 17 illustrates a table for quantitative comparison on the GNMC dataset for an aspect ratio-aware cropping task, in accordance with aspects of the technology.
Fig. 18 imagery used for the evaluation of the table in Fig. 17, in accordance with aspects of the technology.
Fig. 19 illustrates an ablation study showing mean IoU (mIOU) score on the GAICD test set, in accordance with aspects of the technology.

Figs. 20A-C show the results of an ablation study, in accordance with aspects of the technology.

Fig. 21 illustrates examples of visual changes according to iterative crop refinement, in accordance with aspects of the technology.

Fig. 22 illustrates a comparison of scores from a scorer before and after the iterative refinement process in accordance with aspects of the technology.

Fig. 23 illustrates the results of a user study in accordance with aspects of the technology.

Fig. 24 illustrates an imagery comparison on a color enhancement task in accordance with aspects of the technology.

Fig. 25 illustrates un-curated examples of image cropping in accordance with aspects of the technology

Figs. 26A-B illustrate a system for use with aspects of the technology.

Fig. 27 illustrates an example method in accordance with aspects of the technology.

DETAILED DESCRIPTION

Conventional cropping methods typically train neural networks on images and ground-truth crops to automatically localize crops such as aesthetic crops. However, these approaches often depend on specially designed networks or features, which struggle to generalize effectively when confronted with new requirements or diverse datasets. Additionally, for specialized cropping tasks such as subject-aware cropping with subject masks or aspect ratio-aware cropping with target aspect ratio, unique networks would then need to be developed and retrained, further complicating the process.

Recent advancements in large vision-language models (VLM), such as GPT-4V and Gemini, have unlocked new potential for various vision tasks. Unfortunately, in a lot of cases, users may not be able to fine-tune the VLM for downstream tasks. Effectively adapting large black-box models for downstream tasks can be very difficult. However, in-context learning (ICL) ability has been observed in large models. Given a test instance and at least two in-context example demonstrations as input, the model may directly infer the output without any parameter update or explicit training for the unseen task. ICL originates from natural language processing (NLP). It has recently been explored in the vision realm, mainly in image-to-image tasks. In accordance with aspects of the present technology, the power of VLMs has been harnessed through ICL for image cropping.

The effectiveness of visual ICL can rely on the quality of the in-context examples (prompts). Manual selection of these examples would be laborious and difficult to scale, rendering that approach unsuitable for commercial applications that may require hundreds, thousands, or even more examples/prompts, since that could not be done manually in the requisite time. Moreover, incorporating aesthetics in a VLM for image cropping is not straightforward. Leveraging VLM in-context learning for image cropping requires effective strategies to achieve suitable effective solutions that can be implemented by a computing system.

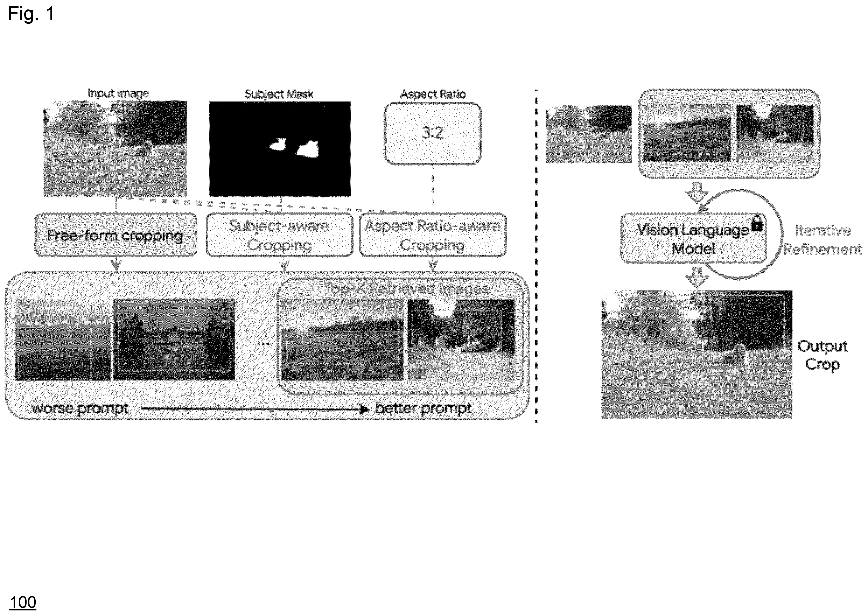

To address these challenges, an effective framework has been developed to adapt VLM for image cropping through in-context learning, referred to herein as Cropper. The framework not only addresses the inherent challenges in traditional image cropping methods but also demonstrates versatility across various cropping tasks, including free-form cropping, subject-aware cropping, and aspect ratio-aware cropping. Illustrated in Fig. 1, approach 100 begins with an efficient prompt retrieval mechanism for image cropping tasks, automating the selection of relevant in-context examples to enhance efficiency without the need for manual input. To further improve the performance, an iterative refinement strategy designed to enhance the quality of the predicted crops produced by the VLM is introduced.

In particular, as shown this approach provides a unified framework for various cropping tasks, including free-form cropping, subject-aware cropping, and aspect ratio-aware cropping. This is built on top of a retrained large vision-language model through in-context learning. As shown in the left side of the figure, given the input image (whether from free-form, subject-aware or aspect ratio-aware cropping), the top-K semantically similar images from a dataset are retrieved as an in-context learning prompt. Then, as shown on the right side of the figure, the in-context learning prompt is fed to a pretrained vision-language model to generate a set of crops. The crop candidates of the set are iteratively refined to yield a final (e.g., visually pleasing) output crop. This process is described in detail further below.

To validate the efficacy of Cropper, extensive experiments were conducted on various benchmark datasets. In addition, the findings were supplemented with user studies. The results, which are discussed further below, demonstrate that Cropper is able to significantly outperform existing cropping methods across various performance metrics. Notably, with only a few (e.g., at least two or three) in-context examples, Cropper is able to achieve superior performance without the need for training. It also provides a unified framework for various cropping tasks, a milestone previously unattained by existing methods.

One aspect of the technology introduces a unified visual in-context-learning framework (Cropper) for image cropping tasks, including free-form, subject-aware, and aspect ratio-aware cropping. The prompt retrieval strategy is another aspect that automates the effective selection of ICL examples for cropping tasks. The iterative refinement strategy is a further aspect that enables the computer-implemented model to progressively enhance the output crop. With a few in-context examples and no explicit training, testing has shown that Cropper is able to surpass current supervised learning methods across various benchmarks and user studies.

*Image Cropping*

Image cropping is an important operation for various photography-related applications. From the perspective of constraints, there are three common types of cropping problems. The first category is free-form cropping, where the objective is to directly identify the best crop without imposing additional constraints. Here, saliency maps, learning-based methods, and reinforcement learning are techniques that can be used to achieve free-form cropping. Another cropping task is subject-aware image cropping, where an additional subject mask is provided to indicate the subject of interest. The third cropping task is aspect ratio-aware cropping, where the crops are expected to adhere to a specified aspect ratio. Many existing image cropping approaches rely on training neural networks on specific datasets, requiring retraining to accommodate different data distributions and requirements. In contrast, the Cropper methodology requires only a few in-context examples and does not need explicit training. Moreover, unlike other methods, Cropper is flexible enough to handle all three cropping tasks in a unified manner.

*In-Context Learning*

In-context learning is a recent paradigm originating from NLP, where large-scale models perform inference on unseen tasks by conditioning on a few in-context examples and the test instance. This paradigm can be effective because users can directly adapt the model to different downstream tasks without the requirement of fine-tuning or changing the model parameters in any way.

*Prompt Retrieval*

It has been shown that the selection and arrangement of in-context examples, also known as prompts, can significantly impact the output performance. These findings have sparked interest in prompt retrieval, where in-context learning examples are retrieved based on similarity metrics given a test instance.

*Cropper Overview*

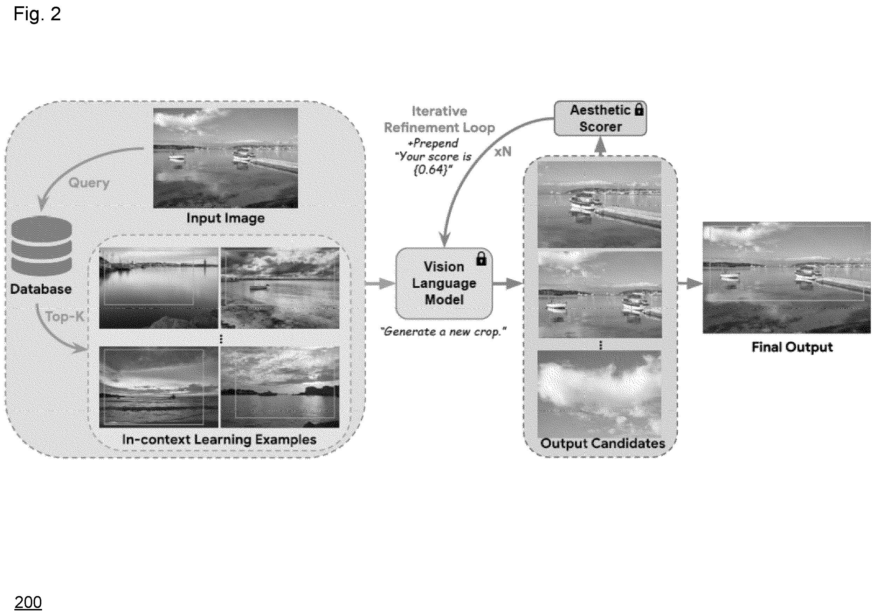

Fig. 2 illustrates an example 200 of the stages of the Cropper process, which has two main phases: (i) visual prompt retrieval, and (ii) iterative crop refinement. Through visual prompt retrieval in the first phase, top-K ICL examples are retrieved using an image similarity metric. The image similarity metric may be, e.g., cosine similarity, Euclidean distance, dot product similarity, etc. This phase may employ one or more of free-form cropping, subject-aware cropping, and/or aspect ratio-aware cropping. Subject-aware cropping may be associated with contextual information about user preferences or other information corresponding to the app for which the cropping is being performed. In particular, for a given input image, Cropper automatically retrieves the top-K suitable context-learning examples along with their ground-truth crop coordinates. Both the input image and the retrieved in-context learning examples are then fed into the vision-language model. This model is prompted to propose several potential crop candidates represented by their coordinates.

In the iterative crop refinement phase, the VLM generates candidate crops based on the relevant ICL examples. These crops can be subsequently scored by a scorer module such as an aesthetic scorer module, which provides feedback guidance for the VLM. The aesthetic scoring may be performed according to an objective set of factors. Such factors may include at least one of lighting, perspective, composition, contrast (e.g., color contrast), color scheme, semantic image content, image style, etc.

Based on this, the VLM iteratively refines the crop candidates using the feedback from the scorer N times, for instance to generate new cropped candidates having improved aesthetic scores. N may be one or a plurality of times, such as 5, 10, 20 or more (or fewer) times. The final top-ranked result is selected as the ultimate crop, which can then be used in the downstream task(s).

The Cropper approach can be used as a direct replacement for conventional cropping or even other resizing functions on various vision tasks involving neural networks such as Transformers. By way of example, downstream tasks may include classification, object detection, segmentation, image quality assessment, video recognition, use of thumbnail images obtained from cropping, etc.

The following begins with a discussion of the general Transformer approach and Gemini methodology as examples only, followed by the details regarding the Cropper approach and implementation, including experimental results. While the technology can be employed with Transformer-type decoders as in the Gemini methodology, the models could be implemented using other neural network approaches, such as convolutional neural networks (CNNs), so long as such approaches can support vision-language models.

### General Transformer Approach

The techniques discussed herein may employ a self-attention architecture, e.g., the Transformer neural network architecture. This can include a decoder-only Transformer architecture. By way of example, the decoder self-attention sub-layer(s) may be configured, at each generation time step, to receive an input for each output position preceding the corresponding output position and, for each of the particular output positions, apply an attention mechanism over the inputs at the output positions preceding the corresponding position using one or more queries derived from the input at the particular output position to generate an updated representation for the particular output position. That is, the decoder self-attention sublayer(s) may apply an attention mechanism that is masked so that it does not attend over or otherwise process any data that is not at a position preceding the current output position in the output sequence.

### Gemini Vision-Language Model Approach

Gemini is one example of a VLM which may be used with aspects of the technology. More particularly, Gemini includes a family of multimodal models that build on top of Transformer decoders, which are modified to enable stable training at scale. Gemini models are trained to accommodate textual input interleaved with a wide variety of audio and visual inputs. They support interleaved sequences of text, image, audio and video as inputs, and can output responses with interleaved image and text. They are trained on a dataset that is multimodal and multilingual. As noted above, other VLMs can be used instead of a Gemini model, such as GPT-4V.

### Visual Prompt Retrieval for Cropping

One method for retrieving in-context learning examples is random selection, where one or multiple samples are randomly chosen from the training dataset. However, the ICL performance of such random selection can be highly sensitive to the chosen samples. In experiments on image cropping, it has been empirically confirmed that random prompt selection can often lead to suboptimal results. Therefore, other approaches besides random selection may be employed to automatically select the most suitable examples for various cropping tasks.

Images that are similar are more likely to be cropped similarly. Thus, an aim can be to retrieve the top-K images and their most relevant ground-truth crops based on some similarity metric. Formally, given an image query $z_q$ and a dataset $\mathcal{D} = (z_i, C_i)_{i=1}^{M}$ containing $M$ pairs of image $z_i$ and crop ground-truth $C_i$, where $C_i$ contains multiple crops $c_1, \ldots, c_s$ for some datasets, seek to retrieve the most relevant in-context examples and crop ground-truth as:

$$\mathcal{Z} = \operatorname*{arg\,max}_{z_i \in \mathcal{D}} Q(z_q, z_i) \quad, \quad |\mathcal{Z}| = K \tag{1}$$

$$\mathcal{H} = \operatorname*{arg\,max}_{c_j \in C_j} G(z_q, c_j) \quad, \quad z_j \in \mathcal{Z} \tag{2}$$

where $\mathcal{Z}$ represents the set of top-K relevant images selected from the dataset $\mathcal{D}$ based on the similarity metric $Q(z_q, z_i)$. $\mathcal{H} = (z_j, c_j)_{j=1}^{K}$ represents the selected in-context images $z_j$ along with their most relevant crop ground-truths based on metric $G(z_q, c_j)$. $Q$ and $G$ are designed differently to accommodate different cropping tasks, including free-form cropping, subject-aware cropping, and aspect ratio-aware cropping.

Free-form cropping aims to identify the best crop without additional constraints regarding aspect ratio or target subject. For this cropping task, the CLIP image embeddings can be used, by way of example, as an off-the-shelf image feature extractor, where Q corresponds to the cosine similarity between the input image $z_q$ and each training example $z_i \in \mathcal{D}$. CLIP is described by Radford, et al. in "Learning transferable visual models from natural language supervision. In: International conference on machine learning" pp. 8748-8763, PMLR (2021).

In free-form cropping datasets, such as GAICD, each image $z_i$ is associated with multiple ground-truth crops $c_i$, each with its mean opinion score (MOS) aggregated from human evaluation. GAICD is described by Zeng et al. in "Grid anchor based image cropping: A new benchmark and an efficient model", IEEE Transactions on Pattern Analysis and Machine Intelligence 44(3), 1304-1319 (2020). The MOS score can be used as G for selecting the ground-truth crops. Therefore, after obtaining $\mathcal{Z}$, the top-ranked crops are selected based on their MOS. Each crop ground-truth $c_i$ is

represented by five tuples, $(s, x_1, y_1, x_2, y_2)$, indicating the MOS and the leftmost, top, rightmost, and bottom positions, respectively.

Subject-aware cropping intends to identify an aesthetic crop containing the subject of interest, which is represented by binary masks provided by users. In this task, the query image $z_q$ is accompanied by a binary mask $m_q$ indicating the subject of interest. Similarly, one can first use CLIP image embedding similarity as $Q$ for retrieving the top-$K$ relevant images. Since each image in this task is associated with multiple target subject masks and their corresponding ground-truth crops, one can further refine it by choosing the most similar mask areas to provide better guidance. G is defined as -$L^2$ distance between the center points of the target mask $m_q$ and the masks from image $z \in \mathcal{Z}$ to select the crop with the closest masks. As a result, the ground-truth crop for the closest mask is provided as the in-context learning example label, and each crop ground-truth $c_i$ is represented $(x_1, y_1, x_2, y_2)$.

Aspect ratio-aware cropping requires the generated crop to conform to a specified aspect ratio $r_q$ given the query image $z_q$. Each image in the dataset for this task is associated with ground-truth crops using different aspect ratios, such as 16:9, 3:4, and 1:1. Similarly, CLIP-based image similarity is adopted as $Q$. $G$ is defined as the similarity between the crop $c_i$'s aspect ratio and the target aspect ratio $r_q$. In other words, for each image $z \in \mathcal{Z}$, only the crop that has the similar target aspect ratio would be used as in-context learning ground-truth. To enforce the aspect ratio constraint in VLM output, one can represent the example crops as $(x, y, w)$ instead, denoting the top left corner $x, y$ and the width w of the crop. The height of the crop can subsequently be calculated by the target aspect ratio.

### *Iterative Crop Refinement*

Without explicit supervision, VLM lacks a deep understanding of the context of the cropping task, such as the provided coordinate system and intended aesthetics. Consequently, it may produce nonsensical outputs even when provided with good in-context learning cropping examples. Empirically, it is observed that the initial crop candidates generated by the VLM lack diversity and sometimes fail to make sense (e.g. being too small or too large). It has been shown that large language models can optimize the output by iteratively incorporating feedback. In view of this, an iterative crop refinement mechanism can be employed with the approaches discussed herein to further guide the VLM in generating aesthetic crops.

Concretely, the VLM is prompted to generate several crop candidates (experiments conducted used 5, although more or less could be generated) based on the in-context learning examples retrieved using the method described above. Subsequently, the image is cropped according to each proposal and the cropped image can then be fed into an aesthetic scorer to obtain corresponding scores.

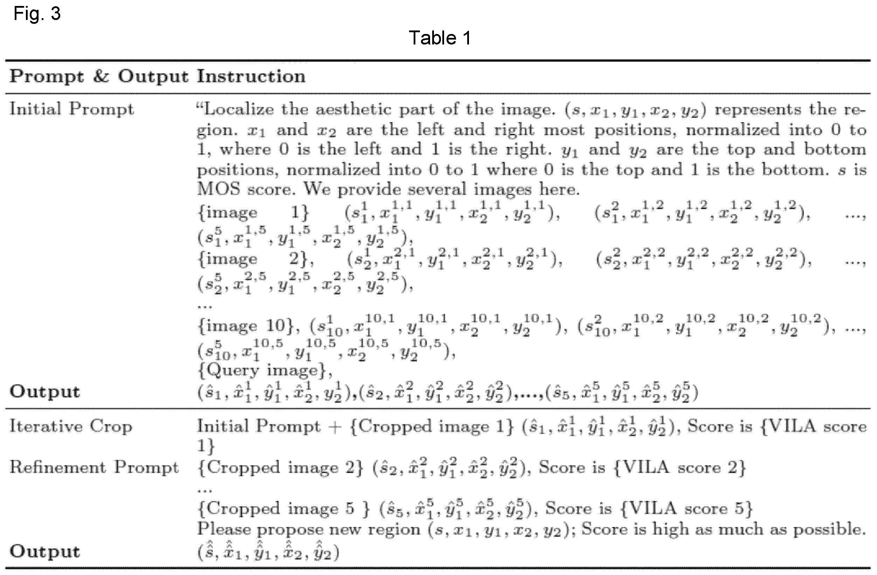

In the refinement phase, the process iteratively provides such feedback to the VLM by scoring the crop candidates and prompting the VLM to generate new candidates to improve the aesthetic score. This iterative process is repeated N times, and the top output is selected as the final result. Table 1 of Fig. 3 shows the prompt design for free-form cropping with the two phases of Cropper. In terms of subject-aware cropping and aspect ratio aware cropping, the only difference depends on whether MOS is predicted together.

In particular table 1 show a VLM prompt used for free-form cropping. The goal is to achieve accurate coordinates of the crop $(\hat{s}, \hat{\hat{x}}_1, \hat{y}_1, \hat{\hat{x}}_2, \hat{y}_2)$. In the initial prompt, ten in-context (ICL) examples were used for image cropping. Using five crops for the task, the format of image $i$'s $j$-th crop is defined as $(s_i^j, x_1^{i,j}, y_1^{i,j}, x_2^{i,j}, y_2^{i,j})$. Intermediate results of an initial prompt are coordinates of five crops. Subsequently, the crop was iteratively refined by accumulating the context into prompts, using refinement prompt. Note that {ViLAscore} was calculated with the aesthetic scorer.

As shown in Table 1, the initial prompt includes "Localize the aesthetic part of the image. $(s, x_1, y_1, x_2, y_2)$ represents the region. $x_1$ and $x_2$ are the left and right most positions, normalized into 0 to 1, where 0 is the left and 1 is the right. $y_1$ and $y_2$ are the top and bottom positions, normalized into 0 to 1 where 0 is the top and 1 is the bottom. s is MOS score. We provide several images here.", which is followed by information about those specific images.

### *Prompts*

The following provides a detailed description of various prompts, including free-form cropping, subject-aware cropping, aspect ratio-aware cropping, and color enhancement.

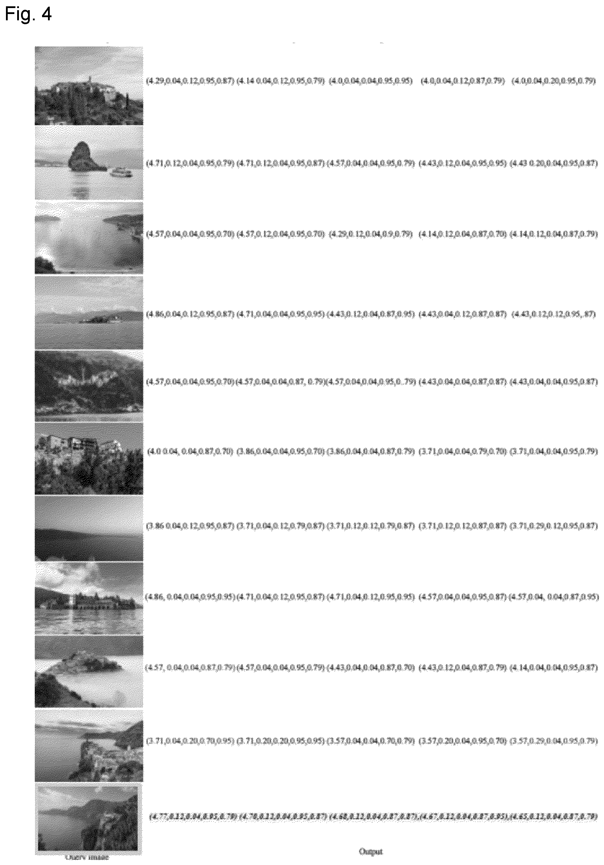

Fig. 4 illustrates an example of an initial prompt for free-form cropping. Here, the prompt is "Localize the aesthetic part of the image. (s,x1,y1,x2,y2) represents the region. x1 and x2 are the left and right most positions, normalized into 0 to 1, where 0 is the left and 1 is the right. y1 and y2 are the top and bottom positions, normalized into 0 to 1 where 0 is the top and 1 is the bottom. s is MOS score. We provide several images here."

As shown in Fig. 4, initial prompts include in-context learning examples and a query image (the bottom image).

Given the query image, visual prompt retrieval selects ten in-context examples where each sample has top-5 crop annotations. In other words, a total 50 crops was used in this example for free-from cropping. The vision-language model (VLM) predicts text-based five crops, then crops are made by parsing the text outputs, which are used for iterative crop refinement stages.

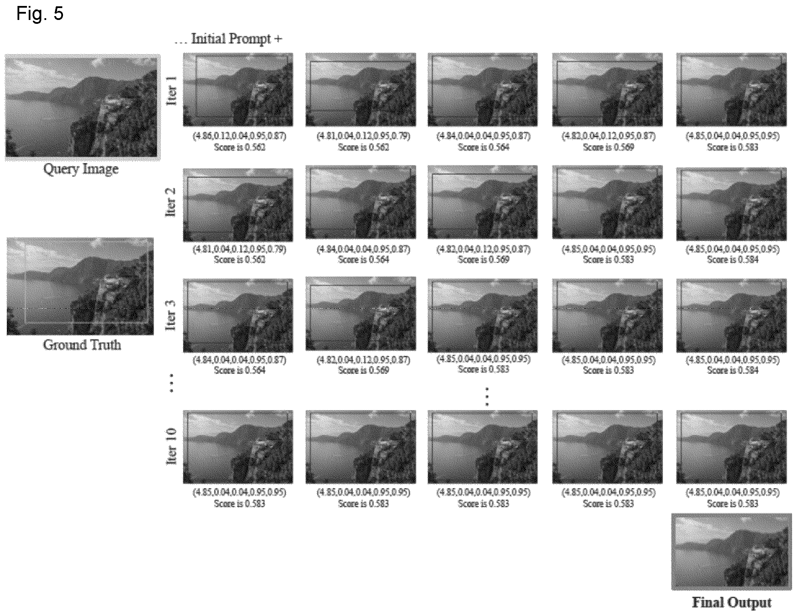

Fig. 5 shows an example prompt for iterative crop refinement. In particular, it is a visualization of iterative crop refinement for free-form cropping. The yellow bounding box (left column) represents the ground truth and the blue bounding boxes (from the second to the last column) illustrate predictions through iterative refinement. The first row is the crops preprocessed from Fig. 4's text-based output. Note that text-based coordinates and images were put together for the refinement process. With the prepended prompts, this process continuously traverses the optimal crop for higher VILA-R score. In particular, with each iteration, the VILA score increases, indicating improved aesthetics. It is observed that the crop is converged after refinement. An explanation of VILA-R scores can be found in the article by Ke et al., "Learning image aesthetics from user comments with vision-language pretraining", in Proceedings of the IEEE/CVF Conference on Computer Vision and Pattern Recognition. pp. 10041-10051 (2023).

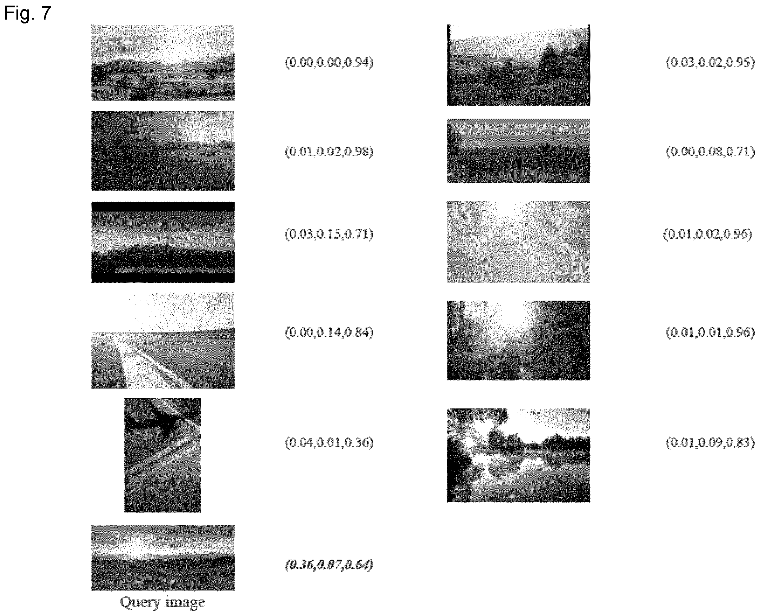

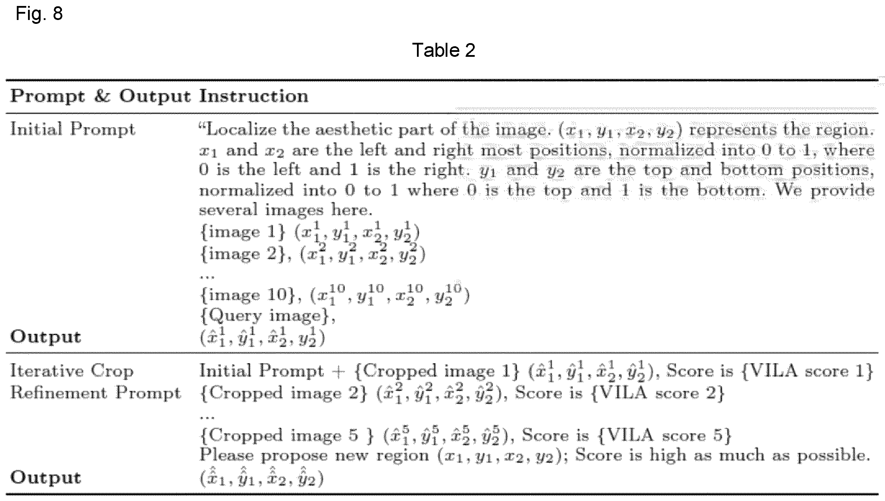

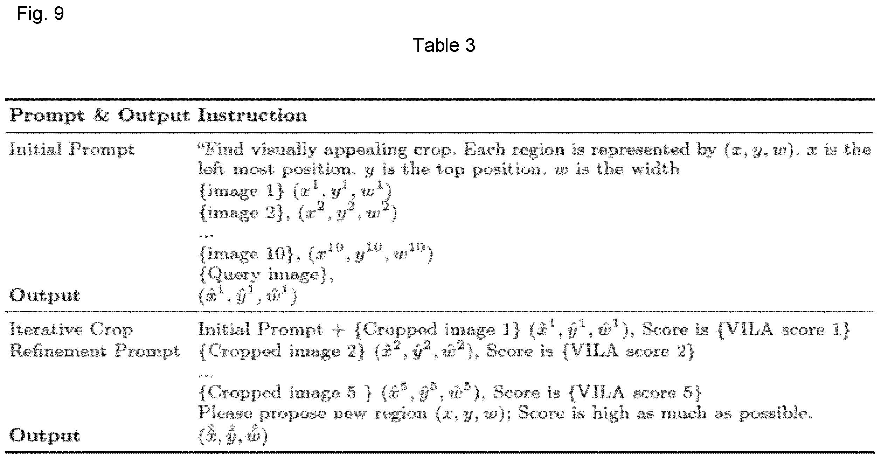

Fig, 6 and Fig. 7 show the prompts for subject-aware cropping and aspect ratio-aware cropping, respectively. Different from free-form cropping is that subject-aware cropping supports one crop per the image. For an aspect ratio-aware crop, as shown in Fig 7, the system predicts only the width of the crop and re-calculates the coordinate based on the given aspect ratio. More details were about prompts for subject-aware cropping (see Table 2 of Fig. 8) and aspect ratio aware cropping (see Table 3 of Fig. 9).

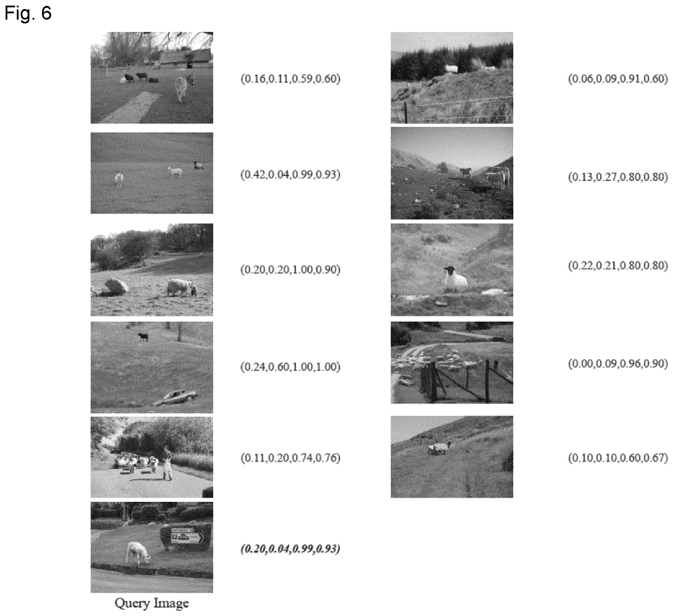

The prompt for Fig. 6 is "Localize the aesthetic part of the image. (x1,y1,x2,y2) represents the region. x1 and x2 are the left and right most positions, normalized into 0 to 1, where 0 is the left and 1 is the right. y1 and y2 are the top and bottom positions, normalized into 0 to 1 where 0 is the top and 1 is the bottom. We provide several images here." The prompt for Fig. 7 is "Find visually appealing crop. Each region is represented by (x,y,w). x is the left most position. y is the top position. w is the width."

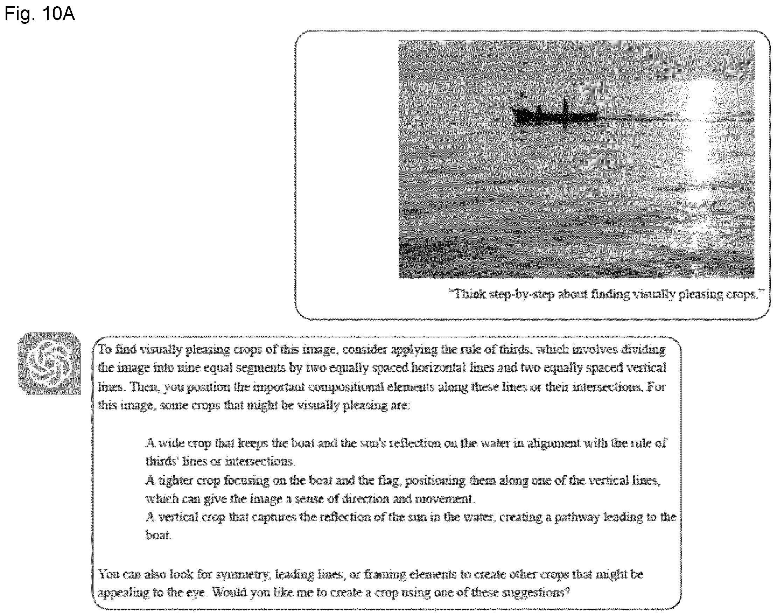

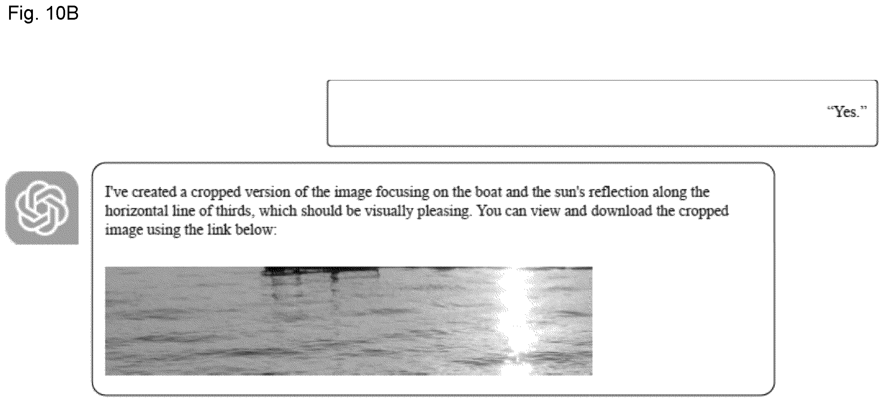

Since these cropping settings start with one crop, the process can accumulate up to five crops (or more) for iterative refinement. Further details of GPT-4V's chain-of-thoughts process are shown in Figs. 10A-B. Even if the GPT-4V is basically good at vision-language reasoning, it can be observed that their actual crop does not involve anything about their language-based cues. In this example, the process automatically identifies the main object denoted as focal points. Despite their strong reasoning ability regarding aesthetics, the crop output is far from visually appealing by missing the main object, a boat.

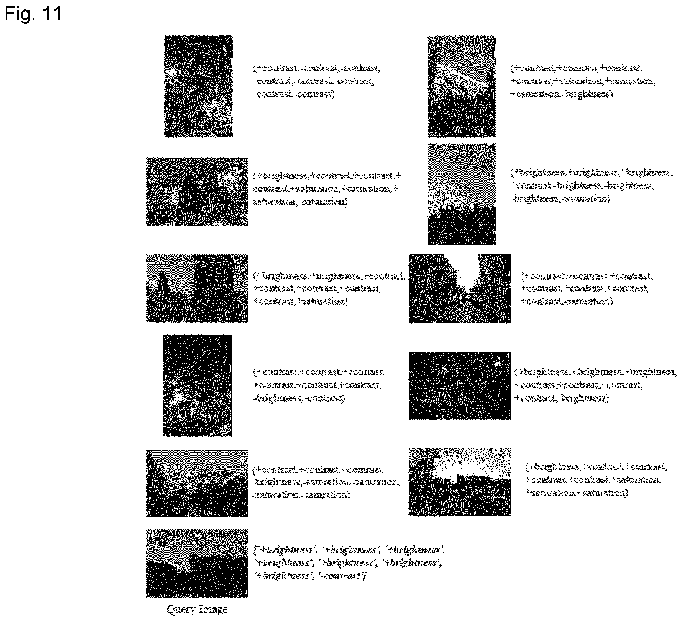

Fig. 11 shows examples of a color enhancement prompt, where the prompt text is "Create a new path for image post-processing by combining adjustments in +contrast,+saturation,+brightness,-contrast, -saturation,-brightness." Note that a brute-force approach can be utilized to create ground-truth trajectories, selecting the one that results in the highest VILA-R score. In this example, the trajectory length was set to 8, including various image operations like +contrast, -contrast, +brightness, -brightness, +saturation, and - saturation. These adjustments were performed using the PILImageEnhance, an image processing library. For contrast and saturation, "+" increases the value by a factor of 1.05, and "-" decreases it by 0.95. Brightness adjustments are similar, with "+" making the image 1.03 times brighter and "-" reducing brightness by a factor of 0.97, resulting in a darker image. Iterative refinement for color enhancement is optional.

### Testing and Experimental Results

Various tests were performed using the Cropper architecture and model described above. The implementation details and experimental setups are discussed below, followed by quantitative and qualitative results with comparisons to state-of-the-art schemes as well as ablation studies.

Datasets

The effectiveness of Cropper was assessed across four cropping benchmarks, comprising two free-form cropping datasets (GAICD and FCDB), one subject-aware cropping dataset (SACD), and one aspect ratio-aware cropping dataset (GNMC). FCDB is described in the article by Chen et al, "Quantitative analysis of automatic image cropping algorithms: A dataset and comparative study", in 2017 IEEE winter conference on applications of computer vision (WACV). pp. 226-234. IEEE (2017). SACD is described in the article by Yang et al., "Focusing on your subject: Deep subject-aware image composition recommendation networks", Computational Visual Media 9(1), 87-107 (2023). And GNMC is described in the article by Christensen et al, "An experience-based direct generation approach to automatic image cropping", IEEE Access 9, 107600-107610 (2021).

The GAICD dataset has 3,336 images, with 2,636 for training, 200 for validation, and 500 for testing, containing 288,069 densely annotated crops. For evaluation, in-context learning examples were retrieved from the GAICD training set (the validation set was not used). Among the 90 annotations available for each retrieved image, the top 5 crops ranked by MOS were selected. Additionally, employing the same retrieval strategy on the GAICD training set, the performance on 348 test images was further evaluated from the FCDB dataset, measuring the out-of-domain performance. The subject-aware cropping dataset SACD contains 2,906 images, with 2,326 for training, 290 for validation, and 290 for testing. The aspect ratio-aware dataset GNMC provides a bounding box with different aspect ratios (16:9, 3:4, 4:3, 2:2, 1:1), containing over 8,000 images for training, over 1,000 images for validation and over 2,000 images for testing.

Metrics

Standard metrics widely used in the image cropping community were used for evaluation of Cropper, including the Spearman's rank-order correlation coefficient ($\overline{SRCC}$), the Pearson correlation ($\overline{PCC}$), and $Acc_{K/N}$. These metrics quantify the alignment of the generated crops with aesthetic preferences, using the ground-truth mean opinion score (MOS). Specifically, $\overline{PCC}$ assesses the linear correlation between the predicted MOS and the ground-truth MOS, whereas $\overline{SRCC}$ measures the correlation of ranking order. Given that Cropper generates five candidate crops per each iteration step on the GAICD dataset, SRCC and PCC were computed using the best five crops instead of considering all crops. $Acc_{K/N}$ indicates whether top-K from predictions could be involved among top-N crops from the ground-truth based on MOS. $Acc_{1/5}$, $Acc_{2/5}$, $Acc_{3/5}$, $Acc_{4/5}$, $Acc_{1/10}$, $Acc_{2/10}$, $Acc_{3/10}$, $Acc_{4/10}$ are measured with $N \in \{5, 10\}$ and $K \in \{1, 2, 3, 4\}$ to return $K$ of top-$N$ accuracy. Additionally, Intersection-over-Union (IoU) and Boundary-displacement-error (Disp) metrics were used to compare with other approaches on the FCDB, SACD, and GNMC datasets. Disp represents the average L1 distance between the ground-truth coordinates and the predicted values.

Visual Prompt Retrieval for Cropping

Similarity measurement $Q$ in Eq. 1 was implemented using cosine similarity between image embeddings extracted from the ViT-B/32 variant of CLIP. Unless otherwise specified, $K$ was set to 10 by default, meaning that the top 10 similar in-context learning images were retrieved.

Iterative Crop Refinement

By default, the Gemini-pro-vision model was employed via the Vertex AI API for the VLM. This model stands out as it can process up to 16 images as input, unlike other vision-language models that have a more limited capacity. The GPT-4V chat API was also considered. GPT-4V is described by Achaim et al. in "Gpt-4 technical report", arXiv preprint arXiv:2303.08774 (2023). Note that the number of candidate crops was set to 5 during the iterative refinement stage.

Aesthetic Scorer

For evaluating the aesthetics of each crop, the VILA-R model was used as the aesthetic scorer. Trained on the AVA dataset, this model specializes in image aesthetic assessment, providing evaluations based on one or more objective factors such as perspectives, compositions, color contrast, color scheme, lighting, semantic image content, image styles, etc.

Comparison with Baselines

*Free-form Image Cropping*

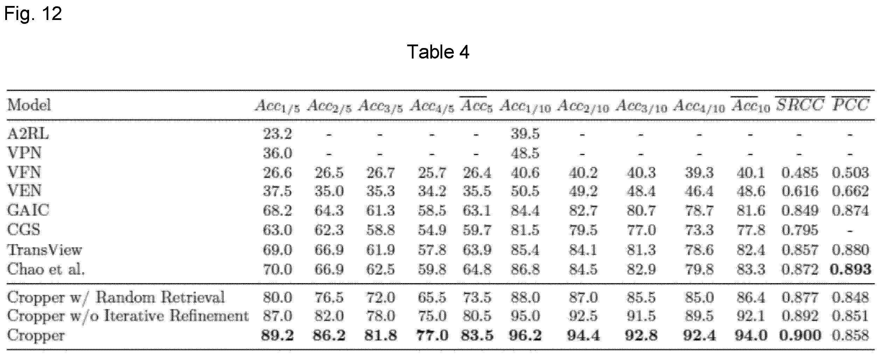

Table 4 in Fig. 12 presents a quantitative comparison on the GAICD dataset of Cropper with other training-based baselines (top section), which require supervised training on all available training data in the dataset. Remarkably, Cropper outperformed the training-based methods by a large margin with only a few in-context learning examples and no training. The bottom section of this table additionally assesses the performance of two ablated variants of Cropper, labeled as "Cropper w/ Random Retrieval", and "Cropper w/o Iterative Refinement". "Cropper Random Retrieval" uses randomly selected in-context examples without further iterative refinement. The variant "Cropper w/o Iterative Refinement" employs visual prompt retrieval but without iterative refinement, meaning that the initial inference from the VLM based on the in-context learning examples is directly used as the output. Moreover, compared to "Cropper w/ Random Retrieval", "Cropper w/o Iterative Refinement" shows a notable improvement, indicating that visual prompt retrieval cropping is effective. Additionally, the gap between Cropper and "Cropper w/o Iterative Refinement" highlights the advancement of iterative refinement. These variations demonstrate the effectiveness of visual prompt retrieval and iterative refinement. Thus, Cropper demonstrates significant superiority over other baselines despite using only a few in-context learning examples and no explicit training.

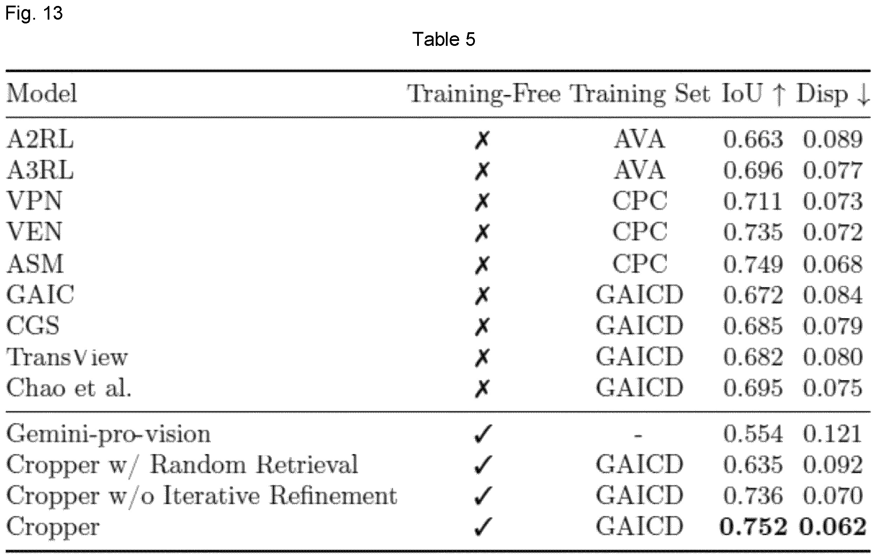

Table 5 of Fig. 13 shows quantitative comparison on the FCDB dataset, where Cropper achieved the best performance. The variants of Cropper in the bottom section utilized the training split of GAICD as the prompt retrieval dataset. Additionally, the zero-shot cropping performance from Gemini-pro-vision was included, which was unsatisfactory. Without good in-context learning examples and the iterative crop refinement, its IoU score and Disp were very low. This highlights that although VLMs are trained on large-scale data and have strong generalization ability, proper guidance is still necessary to enhance performance in specific vision tasks. Cropper demonstrated its value in addressing this challenge.

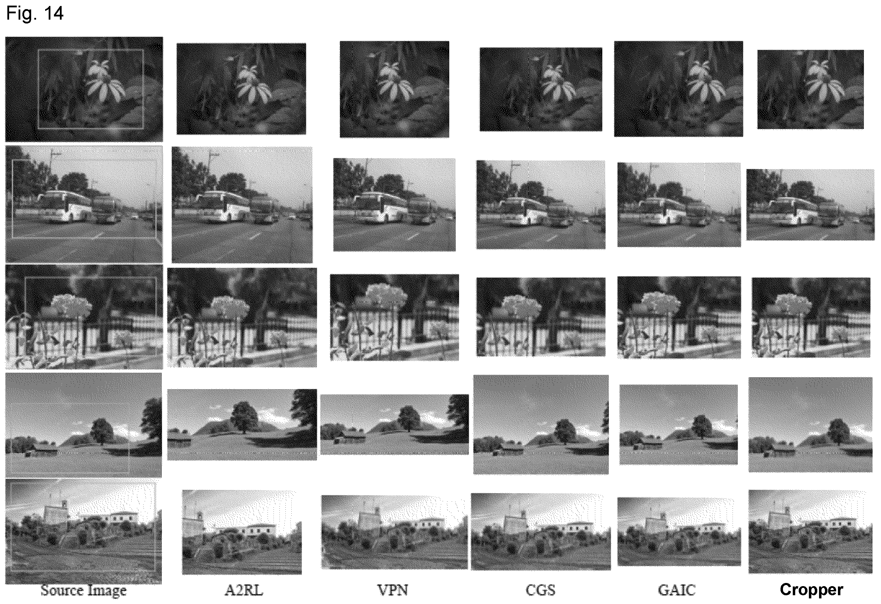

Fig. 14 shows a visual comparison between Cropper and other free-form image cropping baselines, namely A2RL, VPN, GAIC, and CGS. The images were generated using the released codes of these methods. Overall, it is observed that the generated Cropper results more closely resemble the ground truth (indicated by the yellow bounding box) compared to the cropping results from other baselines. Particularly noteworthy is the fourth row, where only the Cropper method successfully excludes the right side of the tree from the crop, resulting in better composition.

*Subject-aware Image Cropping*

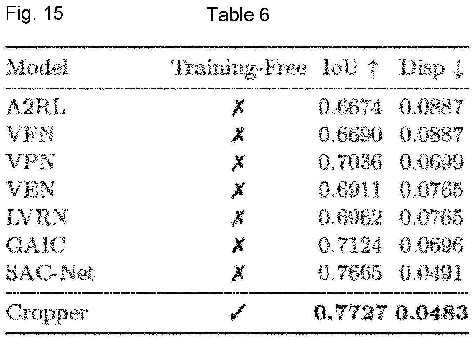

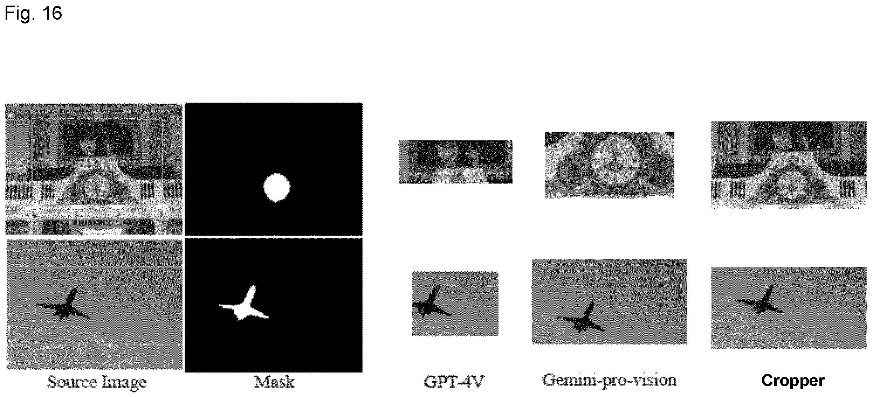

Table 6 of Fig. 15 shows the quantitative comparison on the SACD dataset, where Cropper surpasses other training-based baselines. The reported numbers are directly taken from the baseline papers. To visually demonstrate the effectiveness of Cropper, visual samples from Cropper are provided in Fig 16, where the yellow bounding box shows the ground-truth. Additionally, the zero-shot inference results are displayed from GPT-4V and Gemini-pro-vision. Both GPT-4V and Gemini-pro-vision were prompted with chain-of-thoughts to crop out the main subject within the image, such as "Think step-by-step about finding visually pleasing crops." However, both models struggled to generate good crops. For example, the crop from GPT-4V in the first row fails to capture the main subject "clock" and instead crops a completely different area. Conversely, Cropper cropped image exhibits better symmetry and successfully captures the subject of interest.

*Aspect Ratio-aware Image Cropping.*

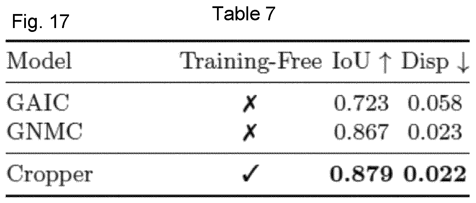

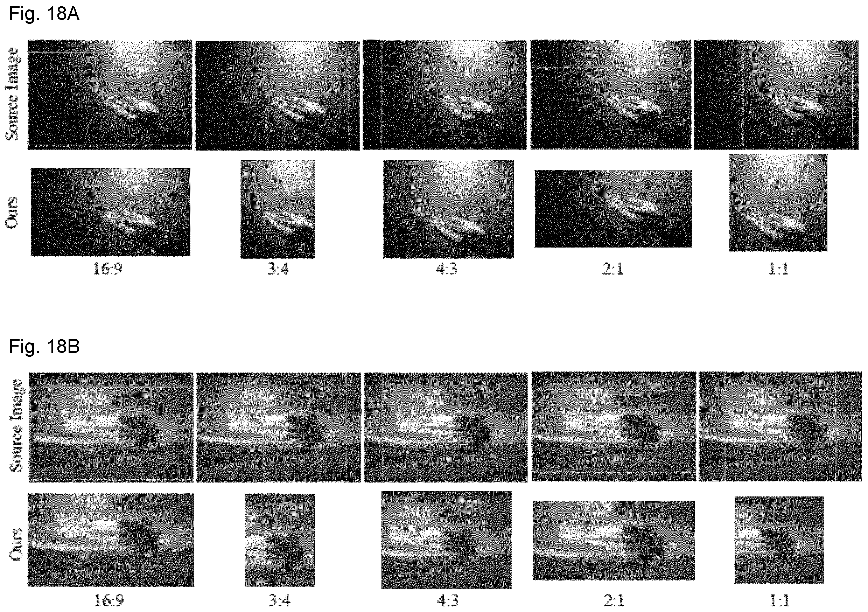

Table 7 of Fig. 17 shows quantitative comparison results on the GNMC dataset for the aspect ratio-aware cropping task. Cropper outperformed other baselines in both IoU and Disp, indicating that Cropper is more adept at cropping the image according to the desired aspect ratio. Figs. 18A-B display example crops from Cropper for each aspect ratio, along with the corresponding ground-truth (the yellow bounding box), illustrating qualitatively that Cropper can generate crops that possess both good aesthetics and adhere to the specified aspect ratio.

Ablation Study

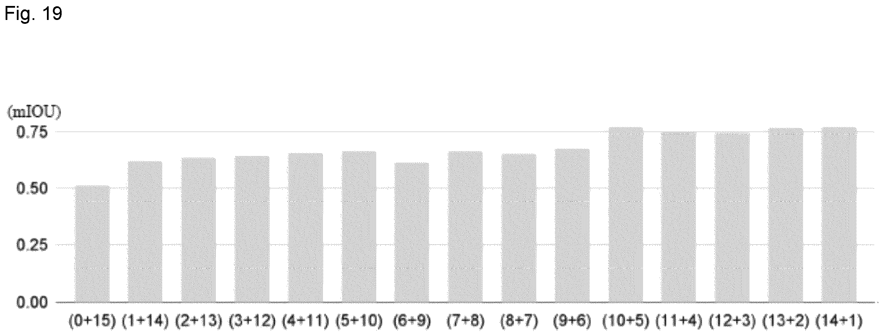

An ablation study was conducted to empirically determine the optimal combinations of two key parameters: 1) the number of retrieved in-context learning examples and 2) the number of candidate crops during iterative refinement. Fig. 19 illustrates the mean IoU (mIOU) score on the GAICD test set with different combinations. The IoU score of the top-1 crop was reported to evaluate the effectiveness of each combination. Empirically, it was found that using 10 in-context examples and 5 candidate crops yields the best result.

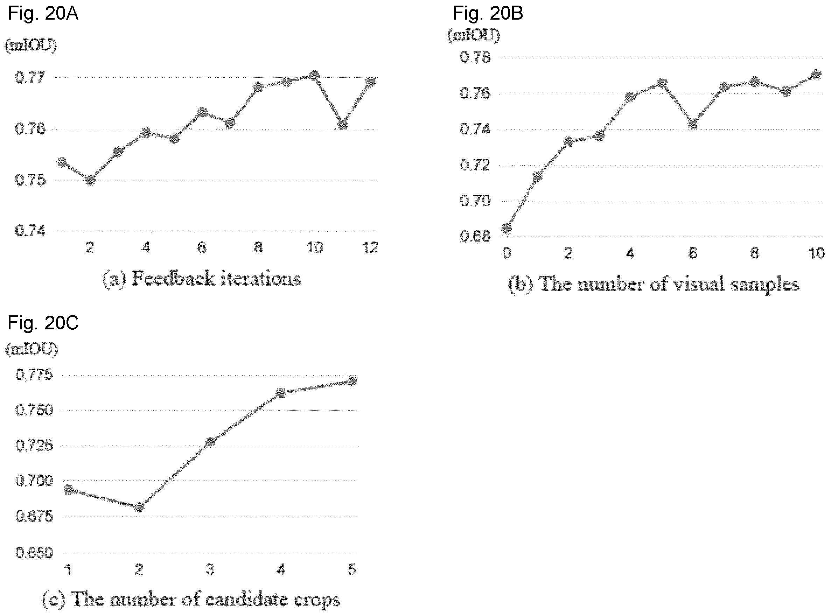

Figs. 20A-C show the results of an ablation study. For each experiment, the mean IoU score of Top-1 crop was measured. In particular, Fig. 20A illustrates the effect of the number of iterative crop refinement iterations. As the number of iterations increases, the mIoU scores gradually converge, and the performance saturates after approximately 10 steps. Consequently, 10 iterations was chosen as the default in the experiments. Additionally, Fig. 20B demonstrates the effect of the number of in-context learning (ICL) examples while holding other parameters constant. The performance also gradually converges as the number of examples increases to 10. Fig. 20C presents the effect of the number of candidate crops, indicating that using five crops is more advantageous than using fewer than five.

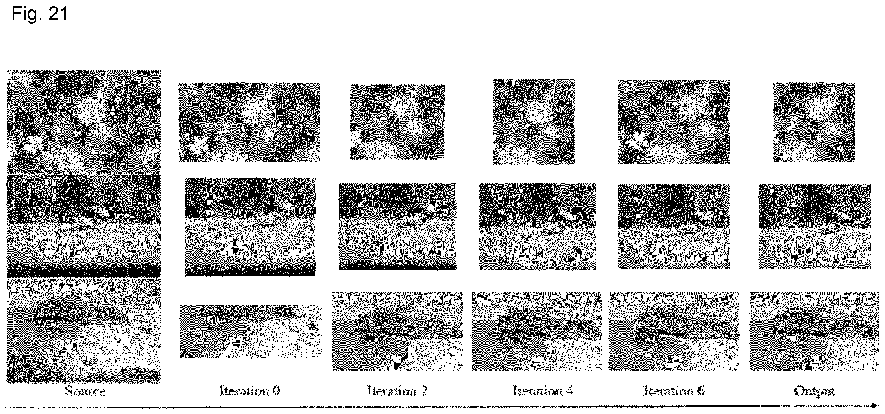

Fig. 21 provides visual examples of how the crop candidates change throughout the iterative refinement process, with the best crop gradually converging. Here, as the number of iterations increases, the crop is close to the ground truth (yellow box).

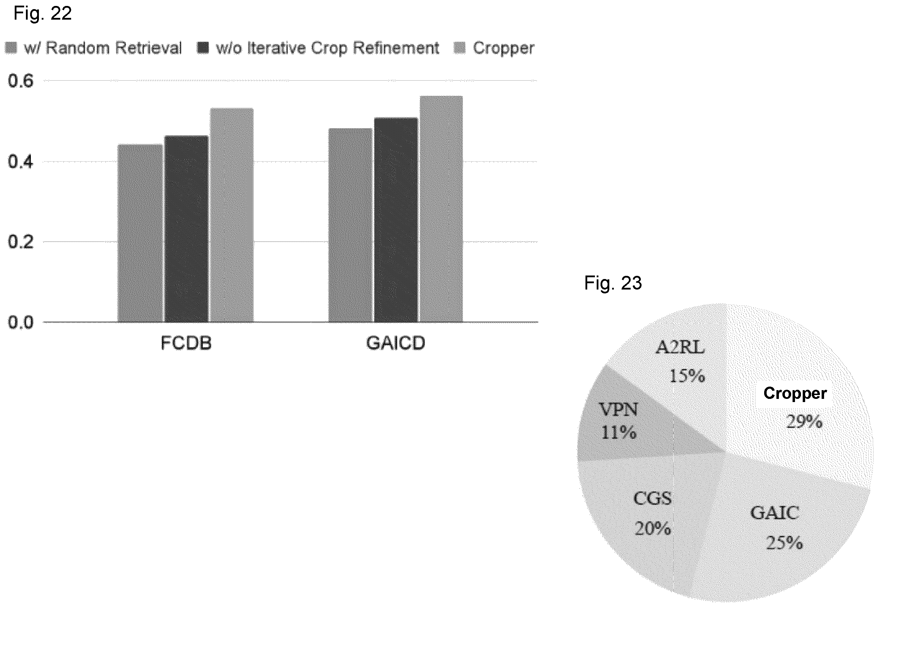

Fig. 22 compares the scores from the aesthetic scorer before and after the iterative refinement process, showing significant improvement in the aesthetic score for both the GAICD and FCDB datasets. In particular, the VILA-R score was calculated on the in-domain GAICD and the out-domain FCDB dataset. This confirms the feasibility of employing the VLM as an optimizer and validates the effectiveness of the proposed iterative crop refinement process.

User Study

To further assess the effectiveness of Cropper, a user study was conducted using Amazon MTurk on a sample of 100 images randomly selected from the GAICD dataset. Five models were compared: A2RL, VPN, CGS, GAIC, and Cropper. In the questionnaire, ten different raters were asked to select the best image from the set of five cropped images generated from all methods, with the images shuffled. Fig. 23 is a chart showing the ratio of times each method was chosen as the best one. The results demonstrate that Cropper generated crops that were most preferred by the users.

Other Vision Applications

To assess the versatility of the Cropper approach, its application to other vision tasks was also explored. Specifically, its effectiveness was tested in color enhancement, using the MIT-Adobe FiveK dataset. The aim was to predict a sequence of image processing operations, such as contrast, brightness, and color saturation adjustments. Since the dataset lacks ground-truth editing operations, a retrieval database was first constructed. This involved randomly sampling 30 operation sequences for each training image and selecting the editing sequence that achieves the highest VILA-R score as the ground truth.

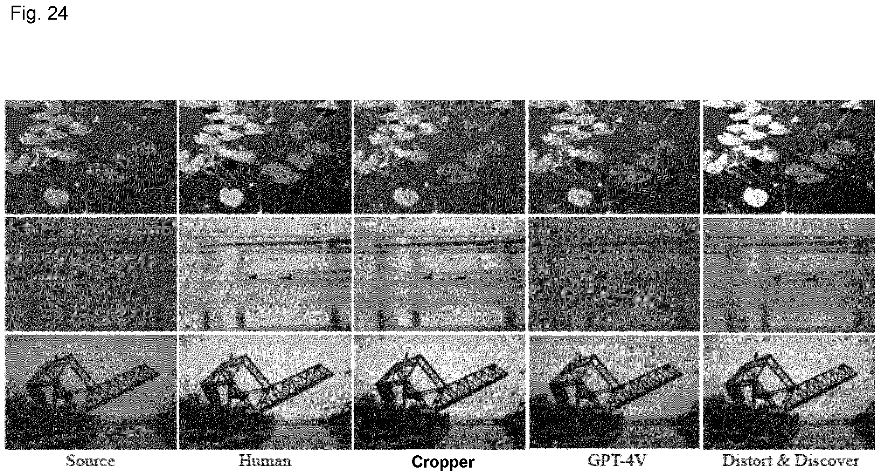

With this retrieval database in place, the Cropper approach was applied to predict the image processing sequence. Visual comparisons in Fig. 24 against GPT-4V and Distort-and-recover show that Cropper demonstrated visible improvement. Notably, while Distort-and-recover relied on a fine-tuning scheme with manually edited images to minimize pixel-wise differences between image pairs, the Cropper method operates in a ground-truth-free manner using in-context learning. This demonstrates that Cropper can effectively enhance images without relying on ground-truth annotations, highlighting the broad utility and generalization capability of the proposed framework.

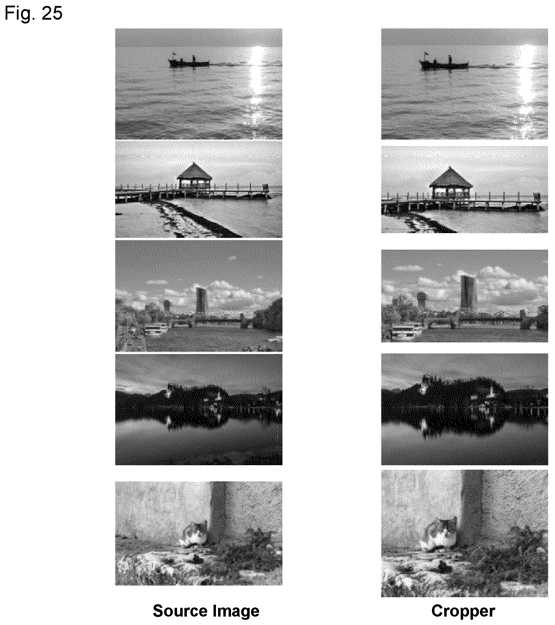

Finally, Fig. 25 illustrates additional un-curated free-form examples of image cropping in accordance with aspects of the technology.

## *Example Computing Architecture*

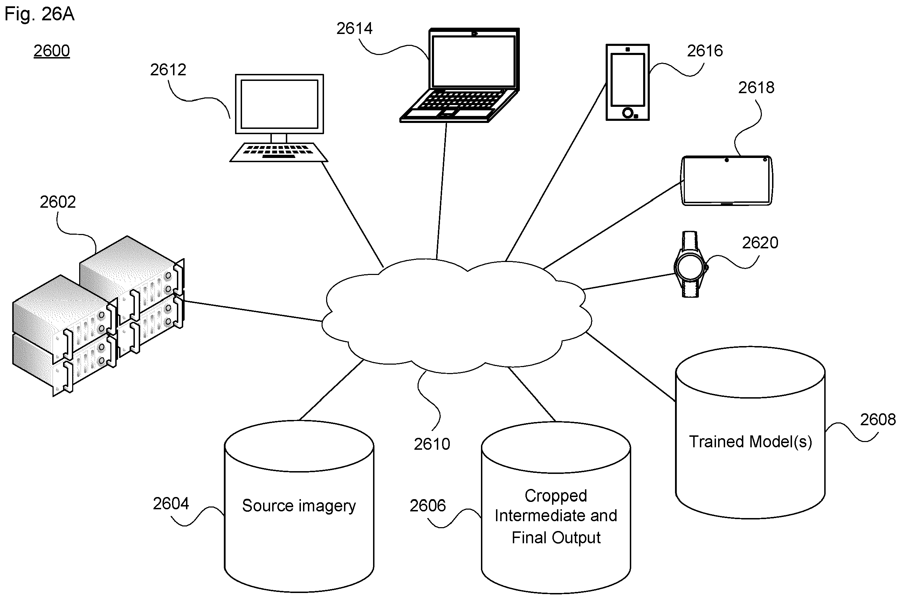

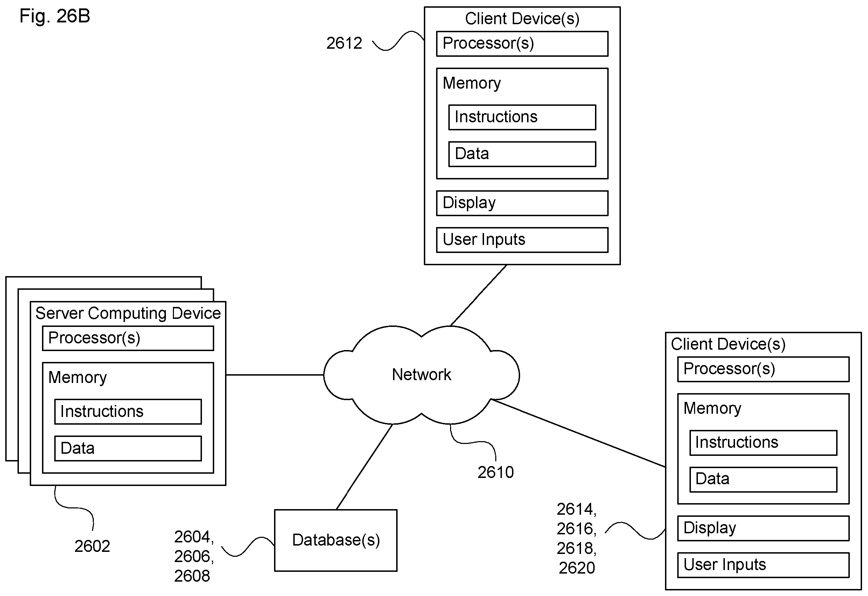

The Cropper technology discussed herein may be fine-tuned or otherwise trained on one or more tensor processing units (TPUs), CPUs, graphical processing units (GPUs), or other computing in accordance with the features disclosed herein. The trained models(s) may also be implemented on such computing devices. One example computing architecture is shown in Figs. 26A and 26B. In particular, Figs. 26A and 26B are pictorial and functional diagrams, respectively, of an example system 2600 that includes a plurality of computing devices and databases connected via a network. For instance, computing device(s) 2602 may be implemented as a cloud-based server system. Databases 2604, 2606 and 2608 may store, e.g., the original source imagery (e.g., uncropped still images, video segments or clips, or full videos), cropped intermediate or final output imagery, as well as the trained Cropper models, respectively.

The server system may access the databases via network 2610. Client devices may include one or more of a desktop computer 2612 and a laptop or tablet PC 2614, for instance to provide the original imagery or other content, and/or to view the output such as curated imagery based on image classifications, object detection or segmentation, image quality assessment, thumbnail generation, etc. which could be provided to the user via a web-based service, app or other program. Other client devices may include handheld devices including a personal communication device such as a mobile phone or PDA 2616 or a tablet 2618. Another example is a wearable device 2620 such as a smartwatch (or head-mounted display device).

The result output could be, for instance, cropped imagery that can be used in a variety of applications and situations. This can include, e.g., face or other object detection and/or recognition. It can also include searching (e.g., via a web browser), advertising, photo curating, etc. Cropping may also be performed to comply with specific aspect ratio or other imaging requirement (e.g., for passport photos).

As shown in Fig. 26B, each of the computing devices 2602 and 2612-2620 may include one or more processors, memory, data and instructions. The memory stores information accessible by the one or more processors, including instructions and data (e.g., models) that may be executed or otherwise used by the processor(s). The memory may be of any type capable of storing information accessible by the processor(s), including a computing device-readable medium. The memory is a non-transitory medium such as a hard-drive, memory card, optical disk, solid-state, etc. Systems may include different combinations of the foregoing, whereby different portions of the instructions and data are stored on different types of media. The instructions may be any set of instructions to be executed directly (such as machine code) or indirectly (such as scripts) by the processor(s). For example, the instructions may be stored as computing device code on the computing device-readable medium. In that regard, the terms "instructions", "modules" and "programs" may be used interchangeably herein. The instructions may be stored in object code format for direct processing by the processor, or in any other computing device language including scripts or collections of independent source code modules that are interpreted on demand or compiled in advance.

The processors may be any conventional processors, such as commercially available CPUs, TPUs, GPUs, etc. Alternatively, each processor may be a dedicated device such as an ASIC or other hardware-based processor. Although Fig. 26B functionally illustrates the processors, memory, and other elements of a given computing device as being within the same block, such devices may actually include multiple processors, computing devices, or memories that may or may not be stored within the same physical housing. Similarly, the memory may be a hard drive or other storage media located in a housing different from that of the processor(s), for instance in a cloud computing system of server 2602. Accordingly, references to a processor or computing device will be understood to include references to a collection of processors or computing devices or memories that may or may not operate in parallel.

Reference to "one or more processors" herein includes situations where a set of processors (e.g., two or more CPUs, TPUs, GPUs or any combination thereof) may be configured to perform one or more operations. Any combination of such a set of processors may perform individual operations or a group of operations. Therefore, reference to "one or more processors" does not require that all processors in the set must perform all of the operations. Rather, unless expressly stated, any one (or different combinations) of the one or more processors may perform different operations when a set of operations is indicated. For instance, different processors may perform specific operations. For example, a first processor may perform visual prompt retrieval, while a second processor performs iterative crop refinement.

The computing devices may include all of the components normally used in connection with a computing device such as the processor and memory described above as well as a user interface subsystem for receiving input from a user and presenting information to the user (e.g., text, imagery, videos and/or other graphical elements). The user interface subsystem may include one or more user inputs (e.g., at least one front (user) facing camera, a mouse, keyboard, touch screen and/or microphone) and one or more display devices (e.g., a monitor having a screen or any other electrical device that is operable to display information (e.g., text, imagery and/or other graphical elements). Other output devices, such as speaker(s) may also provide information to users.

The user-related computing devices (e.g., 2612-2620) may communicate with a back-end computing system (e.g., server 2602) via one or more networks, such as network 2610. The network 2610, and intervening nodes, may include various configurations and protocols including short range communication protocols such as Bluetooth™, Bluetooth LE™, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any device capable of transmitting data to and from other computing devices, such as modems and wireless interfaces.

In one example, computing device 2602 may include one or more server computing devices having a plurality of computing devices, e.g., a load balanced server farm or cloud computing system, that exchange information with different nodes of a network for the purpose of receiving, processing and transmitting the data to and from other computing devices. For instance, computing device 2602 may include one or more server computing devices that are capable of communicating with any of the computing devices 2612-2620 via the network 2610. The computing device 2602 may implement a back-end inference server (e.g., a cloud-based inference server), which receives imagery obtained by desktop computer 2612, laptop/tablet PC 2614, mobile phone or PDA 2616, tablet 2618 or wearable device 2620.

Module and model information or other data derived from the approaches discussed herein may be shared by the server with one or more of the client computing devices. Alternatively or additionally, the client device(s) may maintain their own databases, models, etc. Thus, a Cropper-based image cropping module can be located on the client side (e.g., on a desktop, laptop, a smart phone, tablet computer or wearable device), or it can be part of a cloud storage system such as server 2602. Alternatively, such a module may split certain operations/functionality between different devices, such as between the client device and the server. By way of example, an input image may be obtained by the client device, which may perform some or all of the Cropper operations (e.g., visual prompt retrieval, iterative crop refinement, etc.) locally, while other such operations are performed by a back-end device such as server 2602.

Benefits of the Cropper technology can include, by way of example only, training savings using fewer compute resources and/or fewer training cycles by the computing system. Also, the technology supports on-device use for portable/mobile client devices, such as mobile phones, tablets, wearable devices, etc. This can be accomplished according to efficiently trained LLMs that run with limited processing resources available to such client devices.

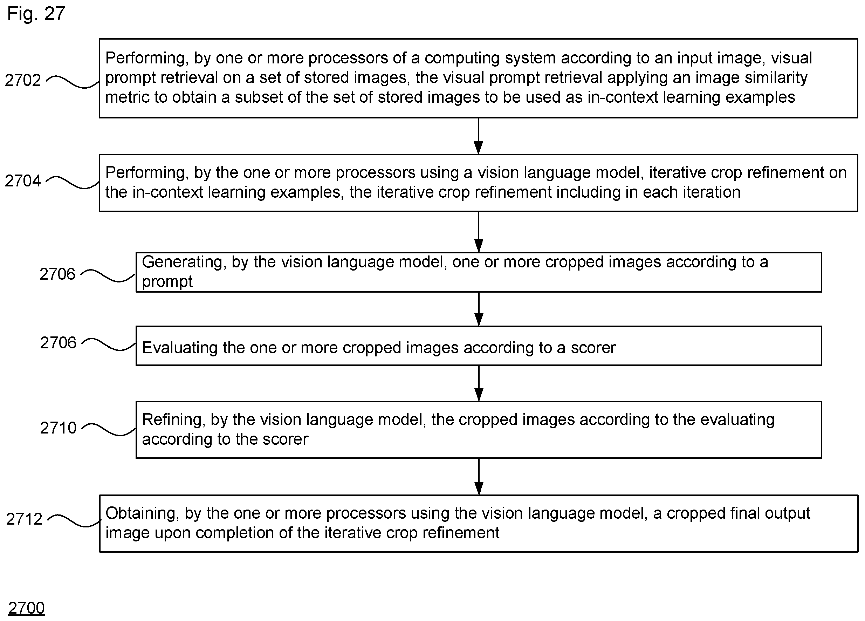

Fig. 27 illustrates an example flow diagram 2700 in accordance with aspects of the technology. This flow diagram presents a method that includes, at block 2702, performing, by one or more processors of a computing system according to an input image, visual prompt retrieval on a set of stored images. The visual prompt retrieval applies an image similarity metric to obtain a subset of the set of stored images to be used as in-context learning examples. At block 2704, the method includes performing, by the one or more processors using a vision language model, iterative crop refinement on the in-context learning examples. The iterative crop refinement including in each iteration: at block 2706 generating, by the vision language model, one or more cropped images according to a prompt, at block 2708 evaluating the one or more cropped images according to a scorer, and at block 2710 refining, by the vision language model, the cropped images according to the evaluating according to the scorer. Then at block 2712 the method includes obtaining, by the one or more processors using the vision language model, a cropped final output image upon completion of the iterative crop refinement

Although the technology herein has been described with reference to particular embodiments, it is to be understood that these embodiments are merely illustrative of the principles and applications of the present technology. It is therefore to be understood that numerous modifications may be made to the illustrative embodiments and that other arrangements may be devised without departing from the spirit and scope of the present technology as defined by the appended claims.

This specification also includes the following clauses:

Clause 1. A method, comprising: performing, by one or more processors of a computing system according to an input image, visual prompt retrieval on a set of stored images, the visual prompt retrieval applying an image similarity metric to obtain a subset of the set of stored images to be used as in-context learning examples; performing, by the one or more processors using a vision language model, iterative crop refinement on the in-context learning examples, the iterative crop refinement including in each iteration: generating, by the vision language model, one or more cropped images according to a prompt; evaluating the one or more cropped images according to a scorer; and refining, by the vision language model, the cropped images according to the evaluating according to the scorer; and obtaining, by the one or more processors using the vision language model, a cropped final output image upon completion of the iterative crop refinement.

Clause 2. The method of clause 1, wherein performing visual prompt retrieval using the image similarity metric to obtain the subset of the set of stored images includes selecting top-K ones of the set of stored images and a corresponding set of ground-truth crops for each image in the subset, in which K is at least 1.

Clause 3. The method of clause 2, wherein the corresponding set of ground-truth crops for each image in the subset is associated with at least one of free-form cropping, subject aware cropping or aspect ratio-aware cropping.

Clause 4. The method of clause 3, in which each crop ground-truth of the set of ground-truth crops for the free-form cropping is represented by a mean opinion score and corners of that crop.

Clause 5. The method of clause 3, in which each crop ground truth of the set of ground-truth crops for the subject aware cropping is associated with a mask indicating a subject of interest.

Clause 6. The method of clause 3, in which each crop ground truth of the set of ground-truth crops for the aspect ratio-aware cropping is associated with a different aspect ratio.

Clause 7. The method of clause 1, wherein generating the one or more cropped images according to the prompt includes providing the input image and the in-context learning examples to the vision language model.

Clause 8. The method of clause 1, wherein the scorer is an aesthetic scorer.

Clause 9. The method of clause 8, wherein the aesthetic scorer is configured to provide evaluations based on a set of factors including at least one of perspective, composition, or color contrast.

Clause 10. The method of clause 1, wherein the image similarity metric is a cosine similarity metric.

Clause 11. The method of clause 1, in which the prompt is to propose a set of potential crop candidates represented by crop coordinates.

Clause 12. The method of clause 1, further comprising sending the cropped final output image to a downstream imaging task.

Clause 13. The method of clause 12, wherein the downstream imaging task is a classification task, an object detection task, a segmentation task, an image quality assessment task, or a video recognition task.

Clause 14. A computing system, comprising: memory configured to store at least one of a set of source imagery or a vision language model; and one or more processors operatively coupled with the memory, the one or more processors being configured to: perform, according to an input image, visual prompt retrieval on a set of images stored in the memory, the visual prompt retrieval including application of an image similarity metric to obtain a subset of the set of stored images to be used as in-context learning examples; perform, using the vision language model, iterative crop refinement on the in-context learning examples, the iterative crop refinement including in each iteration: generation, by the vision language model, one or more cropped images according to a prompt; evaluation of the one or more cropped images according to a scorer; and refinement, by the vision language model, of the cropped images according to the evaluating according to the scorer; and obtain, using the vision language model, a cropped final output image upon completion of the iterative crop refinement.

Clause 15. The computing system of clause 14, wherein performance of visual prompt retrieval using the image similarity metric to obtain the subset of the set of stored images includes selection of top-K ones of the set of stored images and a corresponding set of ground-truth crops for each image in the subset, in which K is at least 1.

Clause 16. The computing system of clause 15, wherein the corresponding set of ground-truth crops for each image in the subset is associated with at least one of free-form cropping, subject aware cropping or aspect ratio-aware cropping.

Clause 17. The computing system of clause 14, wherein generation of the one or more cropped images according to the prompt includes providing the input image and the in-context learning examples to the vision language model.

Clause 18. The computing system of clause 14, wherein the image similarity metric is a cosine similarity metric.

Clause 19. The computing system of clause 14, in which the prompt is to propose a set of potential crop candidates represented by crop coordinates.

Clause 20. The computing system of clause 14, wherein the one or more processors are further configured to apply the cropped final output image to a downstream imaging task.

**Claims**

1.  A method, comprising:

    performing, by one or more processors of a computing system according to an input image, visual prompt retrieval on a set of stored images, the visual prompt retrieval comprising applying an image similarity metric to obtain a subset of the set of stored images to be used as in-context learning examples;
    performing, by the one or more processors using a vision language model, iterative crop refinement on the in-context learning examples, the iterative crop refinement including in each iteration:

    generating, by the vision language model, one or more cropped images according to a prompt;
    evaluating the one or more cropped images according to a scorer; and
    refining, by the vision language model, the cropped images according to the evaluating according to the scorer; and

    obtaining, by the one or more processors using the vision language model, a cropped final output image upon completion of the iterative crop refinement.

2.  The method of claim 1, wherein performing visual prompt retrieval using the image similarity metric to obtain the subset of the set of stored images includes selecting top-K ones of the set of stored images and a corresponding set of ground-truth crops for each image in the subset, in which K is at least 1.

3.  The method of claim 2, wherein the corresponding set of ground-truth crops for each image in the subset is associated with at least one of free-form cropping, subject-aware cropping or aspect ratio-aware cropping.

4.  The method of claim 3, in which each crop ground-truth of the set of ground-truth crops for the free-form cropping is represented by a mean opinion score and corners of that crop.

5.  The method of claim 3 or claim 4, in which each crop ground truth of the set of ground-truth crops for the subject-aware cropping is associated with a mask indicating a subject of interest.

6.  The method of any of claims 3 to 5, in which each crop ground truth of the set of ground-truth crops for the aspect ratio-aware cropping is associated with a different aspect ratio.

7.  The method of any preceding claim, wherein generating the one or more cropped images according to the prompt includes providing the input image and the in-context learning examples to the vision language model.

8.  The method of any preceding claim, wherein the scorer is an aesthetic scorer.

9.  The method of claim 8, wherein the aesthetic scorer is configured to provide evaluations based on a set of factors including at least one of perspective, composition, or color contrast.

10. The method of any preceding claim, wherein the image similarity metric is a cosine similarity metric.

11. The method of any preceding claim, in which the prompt is to propose a set of potential crop candidates represented by crop coordinates.

12. The method of any preceding claim, further comprising sending the cropped final output image to a downstream imaging task.

13. The method of claim 12, wherein the downstream imaging task is a classification task, an object detection task, a segmentation task, an image quality assessment task, or a video recognition task.

14. A computing system, comprising:

    a memory; and
    one or more processors operatively coupled with the memory,
    wherein the memory stores computer readable instructions that, when executed by the one or more processors, cause the computing system to perform a method according to any preceding claim.

15. A computer program product comprising computer-readable instructions that, when executed by a computer, cause the computer to perform a method according to any of claims 1 to 13.

Fig. 1

100

Fig. 2

Input Image

Query

Database

Top-K

In-context Learning Examples

Iterative Refinement Loop
+Prepend
"Your score is {0.64}" xN

Aesthetic 🔒 Scorer

Vision Language Model 🔒

"Generate a new crop."

Output Candidates

Final Output

EP 4 672 167 A1

200

Fig. 3

## Table 1

| Prompt & Output Instruction | |
| --- | --- |
| Initial Prompt | "Localize the aesthetic part of the image. $(s, x_1, y_1, x_2, y_2)$ represents the region. $x_1$ and $x_2$ are the left and right most positions, normalized into 0 to 1, where 0 is the left and 1 is the right. $y_1$ and $y_2$ are the top and bottom positions, normalized into 0 to 1 where 0 is the top and 1 is the bottom. $s$ is MOS score. We provide several images here.<br>{image 1} $(s_1^1, x_1^{1,1}, y_1^{1,1}, x_2^{1,1}, y_2^{1,1})$, $(s_1^2, x_1^{1,2}, y_1^{1,2}, x_2^{1,2}, y_2^{1,2})$, ..., $(s_1^5, x_1^{1,5}, y_1^{1,5}, x_2^{1,5}, y_2^{1,5})$,<br>{image 2}, $(s_2^1, x_1^{2,1}, y_1^{2,1}, x_2^{2,1}, y_2^{2,1})$, $(s_2^2, x_1^{2,2}, y_1^{2,2}, x_2^{2,2}, y_2^{2,2})$, ..., $(s_2^5, x_1^{2,5}, y_1^{2,5}, x_2^{2,5}, y_2^{2,5})$,<br>...<br>{image 10}, $(s_{10}^1, x_1^{10,1}, y_1^{10,1}, x_2^{10,1}, y_2^{10,1})$, $(s_{10}^2, x_1^{10,2}, y_1^{10,2}, x_2^{10,2}, y_2^{10,2})$, ..., $(s_{10}^5, x_1^{10,5}, y_1^{10,5}, x_2^{10,5}, y_2^{10,5})$,<br>{Query image}, |
| Output | $(\hat{s}_1, \hat{x}_1^1, \hat{y}_1^1, \hat{x}_2^1, \hat{y}_2^1), (\hat{s}_2, \hat{x}_1^2, \hat{y}_1^2, \hat{x}_2^2, \hat{y}_2^2), ..., (\hat{s}_5, \hat{x}_1^5, \hat{y}_1^5, \hat{x}_2^5, \hat{y}_2^5)$ |
| Iterative Crop | Initial Prompt + {Cropped image 1} $(\hat{s}_1, \hat{x}_1^1, \hat{y}_1^1, \hat{x}_2^1, \hat{y}_2^1)$, Score is {VILA score 1} |
| Refinement Prompt | {Cropped image 2} $(\hat{s}_2, \hat{x}_1^2, \hat{y}_1^2, \hat{x}_2^2, \hat{y}_2^2)$, Score is {VILA score 2}<br>...<br>{Cropped image 5 } $(\hat{s}_5, \hat{x}_1^5, \hat{y}_1^5, \hat{x}_2^5, \hat{y}_2^5)$, Score is {VILA score 5}<br>Please propose new region $(s, x_1, y_1, x_2, y_2)$; Score is high as much as possible. |
| Output | $(\hat{\hat{s}}, \hat{\hat{x}}_1, \hat{\hat{y}}_1, \hat{\hat{x}}_2, \hat{\hat{y}}_2)$ |

Fig. 4

Fig. 5

Fig. 6

Query Image

Fig. 7

(0.00,0.00,0.94)

(0.03,0.02,0.95)

(0.01,0.02,0.98)

(0.00,0.08,0.71)

(0.03,0.15,0.71)

(0.01,0.02,0.96)

(0.00,0.14,0.84)

(0.01,0.01,0.96)

(0.04,0.01,0.36)

(0.01,0.09,0.83)

*(0.36,0.07,0.64)*

Query image

Fig. 8

## Table 2

| Prompt & Output | Instruction |
|---|---|
| Initial Prompt | "Localize the aesthetic part of the image. $(x_1, y_1, x_2, y_2)$ represents the region. $x_1$ and $x_2$ are the left and right most positions, normalized into 0 to 1, where 0 is the left and 1 is the right. $y_1$ and $y_2$ are the top and bottom positions, normalized into 0 to 1 where 0 is the top and 1 is the bottom. We provide several images here.<br>{image 1} $(x_1^1, y_1^1, x_2^1, y_2^1)$<br>{image 2}, $(x_1^2, y_1^2, x_2^2, y_2^2)$<br>...<br>{image 10}, $(x_1^{10}, y_1^{10}, x_2^{10}, y_2^{10})$<br>{Query image}, |
| Output | $(\hat{x}_1^1, \hat{y}_1^1, \hat{x}_2^1, \hat{y}_2^1)$ |
| Iterative Crop Refinement Prompt | Initial Prompt + {Cropped image 1} $(\hat{x}_1^1, \hat{y}_1^1, \hat{x}_2^1, \hat{y}_2^1)$, Score is {VILA score 1}<br>{Cropped image 2} $(\hat{x}_1^2, \hat{y}_1^2, \hat{x}_2^2, \hat{y}_2^2)$, Score is {VILA score 2}<br>...<br>{Cropped image 5 } $(\hat{x}_1^5, \hat{y}_1^5, \hat{x}_2^5, \hat{y}_2^5)$, Score is {VILA score 5}<br>Please propose new region $(x_1, y_1, x_2, y_2)$; Score is high as much as possible. |
| Output | $(\hat{x}_1, \hat{y}_1, \hat{x}_2, \hat{y}_2)$ |

Fig. 9

Table 3

| Prompt & Output | Instruction |
| --- | --- |
| Initial Prompt | "Find visually appealing crop. Each region is represented by $(x, y, w)$. $x$ is the left most position. $y$ is the top position. $w$ is the width<br>{image 1} $(x^1, y^1, w^1)$<br>{image 2}, $(x^2, y^2, w^2)$<br>...<br>{image 10}, $(x^{10}, y^{10}, w^{10})$<br>{Query image}, |
| **Output** | $(\hat{x}^1, \hat{y}^1, \hat{w}^1)$ |
| Iterative Crop Refinement Prompt | Initial Prompt + {Cropped image 1} $(\hat{x}^1, \hat{y}^1, \hat{w}^1)$, Score is {VILA score 1}<br>{Cropped image 2} $(\hat{x}^2, \hat{y}^2, \hat{w}^2)$, Score is {VILA score 2}<br>...<br>{Cropped image 5 } $(\hat{x}^5, \hat{y}^5, \hat{w}^5)$, Score is {VILA score 5}<br>Please propose new region $(x, y, w)$; Score is high as much as possible. |
| **Output** | $(\hat{\hat{x}}, \hat{\hat{y}}, \hat{\hat{w}})$ |

## Fig. 10A

"Think step-by-step about finding visually pleasing crops."

To find visually pleasing crops of this image, consider applying the rule of thirds, which involves dividing the image into nine equal segments by two equally spaced horizontal lines and two equally spaced vertical lines. Then, you position the important compositional elements along these lines or their intersections. For this image, some crops that might be visually pleasing are:

A wide crop that keeps the boat and the sun's reflection on the water in alignment with the rule of thirds' lines or intersections.

A tighter crop focusing on the boat and the flag, positioning them along one of the vertical lines, which can give the image a sense of direction and movement.

A vertical crop that captures the reflection of the sun in the water, creating a pathway leading to the boat.

You can also look for symmetry, leading lines, or framing elements to create other crops that might be appealing to the eye. Would you like me to create a crop using one of these suggestions?

Fig. 10B

"Yes."

I've created a cropped version of the image focusing on the boat and the sun's reflection along the horizontal line of thirds, which should be visually pleasing. You can view and download the cropped image using the link below:

Fig. 11

Fig. 12

Table 4

| Model | $Acc_{1/5}$ | $Acc_{2/5}$ | $Acc_{3/5}$ | $Acc_{4/5}$ | $\overline{Acc}_5$ | $Acc_{1/10}$ | $Acc_{2/10}$ | $Acc_{3/10}$ | $Acc_{4/10}$ | $\overline{Acc}_{10}$ | $\overline{SRCC}$ | $\overline{PCC}$ |
|---|---|---|---|---|---|---|---|---|---|---|---|---|
| A2RL | 23.2 | - | - | - | - | 39.5 | - | - | - | - | - | - |
| VPN | 36.0 | - | - | - | - | 48.5 | - | - | - | - | - | - |
| VFN | 26.6 | 26.5 | 26.7 | 25.7 | 26.4 | 40.6 | 40.2 | 40.3 | 39.3 | 40.1 | 0.485 | 0.503 |
| VEN | 37.5 | 35.0 | 35.3 | 34.2 | 35.5 | 50.5 | 49.2 | 48.4 | 46.4 | 48.6 | 0.616 | 0.662 |
| GAIC | 68.2 | 64.3 | 61.3 | 58.5 | 63.1 | 84.4 | 82.7 | 80.7 | 78.7 | 81.6 | 0.849 | 0.874 |
| CGS | 63.0 | 62.3 | 58.8 | 54.9 | 59.7 | 81.5 | 79.5 | 77.0 | 73.3 | 77.8 | 0.795 | - |
| TransView | 69.0 | 66.9 | 61.9 | 57.8 | 63.9 | 85.4 | 84.1 | 81.3 | 78.6 | 82.4 | 0.857 | 0.880 |
| Chao et al. | 70.0 | 66.9 | 62.5 | 59.8 | 64.8 | 86.8 | 84.5 | 82.9 | 79.8 | 83.3 | 0.872 | **0.893** |
| Cropper w/ Random Retrieval | 80.0 | 76.5 | 72.0 | 65.5 | 73.5 | 88.0 | 87.0 | 85.5 | 85.0 | 86.4 | 0.877 | 0.848 |
| Cropper w/o Iterative Refinement | 87.0 | 82.0 | 78.0 | 75.0 | 80.5 | 95.0 | 92.5 | 91.5 | 89.5 | 92.1 | 0.892 | 0.851 |
| Cropper | **89.2** | **86.2** | **81.8** | **77.0** | **83.5** | **96.2** | **94.4** | **92.8** | **92.4** | **94.0** | **0.900** | 0.858 |

Fig. 13

Table 5

| Model | Training-Free | Training Set | IoU ↑ | Disp ↓ |
|---|---|---|---|---|
| A2RL | ✗ | AVA | 0.663 | 0.089 |
| A3RL | ✗ | AVA | 0.696 | 0.077 |
| VPN | ✗ | CPC | 0.711 | 0.073 |
| VEN | ✗ | CPC | 0.735 | 0.072 |
| ASM | ✗ | CPC | 0.749 | 0.068 |
| GAIC | ✗ | GAICD | 0.672 | 0.084 |
| CGS | ✗ | GAICD | 0.685 | 0.079 |
| TransView | ✗ | GAICD | 0.682 | 0.080 |
| Chao et al. | ✗ | GAICD | 0.695 | 0.075 |
| Gemini-pro-vision | ✓ | - | 0.554 | 0.121 |
| Cropper w/ Random Retrieval | ✓ | GAICD | 0.635 | 0.092 |
| Cropper w/o Iterative Refinement | ✓ | GAICD | 0.736 | 0.070 |
| Cropper | ✓ | GAICD | **0.752** | **0.062** |

Fig. 14

| Source Image | A2RL | VPN | CGS | GAIC | **Cropper** |

Fig. 15                    Table 6

| Model | Training-Free | IoU ↑ | Disp ↓ |
|---|---|---|---|
| A2RL | ✗ | 0.6674 | 0.0887 |
| VFN | ✗ | 0.6690 | 0.0887 |
| VPN | ✗ | 0.7036 | 0.0699 |
| VEN | ✗ | 0.6911 | 0.0765 |
| LVRN | ✗ | 0.6962 | 0.0765 |
| GAIC | ✗ | 0.7124 | 0.0696 |
| SAC-Net | ✗ | 0.7665 | 0.0491 |
| Cropper | ✓ | **0.7727** | **0.0483** |

Fig. 16

Source Image    Mask    GPT-4V    Gemini-pro-vision    Cropper

Fig. 17

Table 7

| Model | Training-Free | IoU ↑ | Disp ↓ |
|---|---|---|---|
| GAIC | ✗ | 0.723 | 0.058 |
| GNMC | ✗ | 0.867 | 0.023 |
| Cropper | ✓ | **0.879** | **0.022** |

EP 4 672 167 A1

Fig. 18A

|  | 16:9 | 3:4 | 4:3 | 2:1 | 1:1 |

Fig. 18B

|  | 16:9 | 3:4 | 4:3 | 2:1 | 1:1 |

Fig. 19

Fig. 20A

(mIOU)

(a) Feedback iterations

Fig. 20B

(mIOU)

(b) The number of visual samples

Fig. 20C

(mIOU)

(c) The number of candidate crops

Fig. 21

Fig. 22

Fig. 23

Fig. 24

Source | Human | **Cropper** | GPT-4V | Distort & Discover

Fig. 25

Cropper

Source Image

Fig. 26A

2600

2614

2616

2618

2612

2602

2620

2608

Trained Model(s)

2610

2604

Source imagery

2606

Cropped Intermediate and Final Output

EP 4 672 167 A1

Fig. 26B

Client Device(s)

Processor(s)

Memory

Instructions

Data

Display

User Inputs

2612

Server Computing Device

Processor(s)

Memory

Instructions

Data

Network

Database(s)

2610

2602

2604,
2606,
2608

Client Device(s)

Processor(s)

Memory

Instructions

Data

Display

User Inputs

2614,
2616,
2618,
2620

EP 4 672 167 A1

42

Fig. 27

2702 — Performing, by one or more processors of a computing system according to an input image, visual prompt retrieval on a set of stored images, the visual prompt retrieval applying an image similarity metric to obtain a subset of the set of stored images to be used as in-context learning examples

2704 — Performing, by the one or more processors using a vision language model, iterative crop refinement on the in-context learning examples, the iterative crop refinement including in each iteration

2706 — Generating, by the vision language model, one or more cropped images according to a prompt

2706 — Evaluating the one or more cropped images according to a scorer

2710 — Refining, by the vision language model, the cropped images according to the evaluating according to the scorer

2712 — Obtaining, by the one or more processors using the vision language model, a cropped final output image upon completion of the iterative crop refinement

2700

EUROPEAN SEARCH REPORT

**Application Number**

EP 25 18 4261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZENG XINGCHEN ET AL: "IntentTuner: An Interactive Framework for Integrating Human Intentions in Fine-tuning Text-to-Image Generative Models", PROCEEDINGS OF THE ACM ON WEB CONFERENCE 2025, ACMPUB27, NEW YORK, NY, USA, 11 May 2024 (2024-05-11), pages 1-18, XP098087461, DOI: 10.1145/3613904.3642165 ISBN: 979-8-4007-1274-6 * Abstract ; 2 ; 4 ; 4.2.1 ; 4.3 ; 5.3 * | 1 | INV. G06V10/25 G06V10/82 |
| A | DEBANG LI ET AL: "A2-RL: Aesthetics Aware Reinforcement Learning for Image Cropping", ARXIV.ORG, CORNELL UNIVERSITY LIBRARY, 201 OLIN LIBRARY CORNELL UNIVERSITY ITHACA, NY 14853, 14 September 2017 (2017-09-14), XP081309940, | 1 | |
| A | LUDDECKE TIMO ET AL: "Image Segmentation Using Text and Image Prompts", 2022 IEEE/CVF CONFERENCE ON COMPUTER VISION AND PATTERN RECOGNITION (CVPR), IEEE, 18 June 2022 (2022-06-18), pages 7076-7086, XP034192927, DOI: 10.1109/CVPR52688.2022.00695 [retrieved on 2022-09-27] * Abstract ; 5.1 ; 5.5 * | 1 | TECHNICAL FIELDS SEARCHED (IPC)<br><br>G06V |

-/--

The present search report has been drawn up for all claims

| Place of search | Date of completion of the search | Examiner |
|---|---|---|
| The Hague | 13 November 2025 | Versluis, Anton |

EPO FORM 1503 03.82 (P04C01)

page 1 of 2

Europäisches
Patentamt

European
Patent Office

Office européen
des brevets

**EUROPEAN SEARCH REPORT**

Application Number

EP 25 18 4261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI FENG ET AL: "Visual in-Context Prompting", 2024 IEEE/CVF CONFERENCE ON COMPUTER VISION AND PATTERN RECOGNITION (CVPR), IEEE, 16 June 2024 (2024-06-16), pages 12861-12871, XP034695583, DOI: 10.1109/CVPR52733.2024.01222 [retrieved on 2024-09-16] * 2 ; 2.3 ; 2.1 * | 1 | |
| A | ZHONG ZHIHANG ET AL: "ClipCrop: Conditioned Cropping Driven by Vision-Language Model", 2023 IEEE/CVF INTERNATIONAL CONFERENCE ON COMPUTER VISION WORKSHOPS (ICCVW), IEEE, 2 October 2023 (2023-10-02), pages 294-304, XP034503798, DOI: 10.1109/ICCVW60793.2023.00037 [retrieved on 2023-12-25] | 1 | |

TECHNICAL FIELDS
SEARCHED (IPC)

The present search report has been drawn up for all claims

| Place of search | Date of completion of the search | Examiner |
|---|---|---|
| The Hague | 13 November 2025 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**REFERENCES CITED IN THE DESCRIPTION**

**Patent documents cited in the description**

- US 63665589

**Non-patent literature cited in the description**

- Learning transferable visual models from natural language supervision. **RADFORD et al.** International conference on machine learning. PMLR, 2021, 8748-8763
- **ZENG et al.** Grid anchor based image cropping: A new benchmark and an efficient model. *IEEE Transactions on Pattern Analysis and Machine Intelligence*, 2020, vol. 44 (3), 1304-1319
- **KE et al.** Learning image aesthetics from user comments with vision-language pretraining. *Proceedings of the IEEE/CVF Conference on Computer Vision and Pattern Recognition.*, 2023, 10041-10051
- Quantitative analysis of automatic image cropping algorithms: A dataset and comparative study. **CHEN et al.** 2017 IEEE winter conference on applications of computer vision (WACV).. IEEE, 2017, 226-234
- **YANG et al.** Focusing on your subject: Deep subject-aware image composition recommendation networks. *Computational Visual Media*, 2023, vol. 9 (1), 87-107
- **CHRISTENSEN et al.** An experience-based direct generation approach to automatic image cropping. *IEEE Access*, 2021, vol. 9, 107600-107610
- **ACHAIM et al.** Gpt-4 technical report. *arXiv preprint arXiv:2303.08774*, 2023